# EUROPEAN PATENT APPLICATION

(11) **EP 4 851 890 A1**
(43) Date of publication of application: **09.12.2026**
(21) Application number: 26183665.4
(22) Date of filing: 08.06.2026
(51) Int. Cl.: G06Q 10/083, B64D 9/00, G06Q 10/087, G06Q 50/40

(54) **INTEGRATED CARGO TRACKING AND PROGNOSTICS HEALTH MONITORING SYSTEM**

(30) Priority: 06.06.2025 US 202563819086 P; 05.06.2026 US 202619699399
(71) Applicant: ARINC Incorporated, Annapolis, MD 21401 (US)
(72) Inventor: Harms, Scott P., Ypsilanti, ND 58497 (US); Uong, Richmond, Maple Grove, MN 55311 (US); Dasrath, Dereck, Rosemount, MN 55068 (US); Haukom, Michael J., Farmington, MN 55024 (US); Reed, Blake A., Jamestown, ND 58401 (US); Delaney, Kevin J., Cedar Rapids, IA 52402 (US); Ayar, Muharrem, Melbourne, FL 32940 (US); Srinivasan, Arun, Glastonbury, CT 06033 (US)
(74) Representative: Dehns

(57) **Abstract**

An apparatus, method, and system are provided for tracking cargo and monitoring the health of cargo handling equipment aboard an aircraft (202). Wireless sensing modules (310) distributed throughout a cargo bay (302) read optical outputs from power drive units (306) to detect occupied and unoccupied positions, and also sense low energy tags (314) attached to cargo containers, pallets, and unit load devices to identify items and triangulate resting locations. The wireless sensing modules further capture fault messages from a cargo drive system to support prognostic health monitoring. Sensed data is forwarded through an aircraft interface device (316) over different communication links to a cloud-based ground system, where the data is processed, compared against a load plan, and presented through a web-based interface. Real-time and historical views allow load masters and airline operators to verify loading progress, validate placement, monitor in-flight pallet conditions, and anticipate component maintenance.

## Description

### PRIORITY

This application claims the benefit of priority to United States Provisional Patent Application Serial No. 63/819,086, filed June 6, 2025 and US Patent Application No. 19/699,399 filed on June 5 2026.

### TECHNICAL FIELD

Embodiments pertain to aviation systems. Some embodiments pertain to cargo tracking.

### BACKGROUND

Air cargo operations involve the movement of containers, pallets, and unit load devices through aircraft cargo bays during loading, transit, and unloading. Cargo handling equipment operates under varied mechanical and environmental conditions across many flight cycles, while the cargo itself may include items sensitive to environmental conditions, or placement accuracy. Airline operators, load masters, maintenance personnel, and freight forwarders have an interest in understanding where individual cargo items are positioned within an aircraft, whether placement aligns with a planned configuration, how the cargo is maintained throughout the phases of flight, and how the underlying handling equipment is performing over time. The aircraft cargo bay environment also presents constraints on radio frequency propagation, on-board network connectivity, and signal strength that affect the gathering and timely delivery of operational data between an aircraft and ground-based systems.

### BRIEF DESCRIPTION OF THE DRAWINGS

The present disclosure is illustrated by way of example and not limitation in the figures of the accompanying drawings, in which like references indicate similar elements and in which:
FIG. 1 illustrates an aviation ecosystem, according to some examples.
FIG. 2 illustrates an aircraft interface device, according to some examples.
FIG. 3 illustrates a cargo tracking and monitoring system, according to some examples.
FIG. 4 illustrates a prognostic health monitoring data capture data flow, according to some examples.
FIG. 5 illustrates an aircraft health user interface, according to some examples.
FIG. 6 illustrates a fleet status user interface, according to some examples.
FIG. 7 illustrates a cargo presence tracking flow, according to some examples.
FIG. 8 illustrates a per-aircraft loading user interface, according to some examples.
FIG. 9 illustrates a load sensing and reporting flow, according to some examples.
FIG. 10 illustrates a load validation flow, according to some examples.
FIG. 11 illustrates an in-flight cargo monitoring flow, according to some examples.
FIG. 12 illustrates an end-to-end cargo tracking and monitoring system, according to some examples.
FIG. 13 illustrates a block diagram of an electronic device, according to some examples.

### DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in or substituted for, those of other embodiments. Embodiments outlined in the claims encompass all available equivalents of those claims.

Embodiments disclosed herein are directed to a multi-functional system designed to capture and track cargo presence and movement while integrating prognostic health monitoring (PHM) for aircraft cargo handling systems. Using a combination of RF-based sensing (e.g., Bluetooth, Bluetooth low energy, Wi-Fi, 433 MHz radio frequency, and LoRaWAN), optical sensors, and processing algorithms, the system provides a comprehensive solution for monitoring cargo during loading and transit. The system addresses one or more limitations of legacy aircraft cargo handling systems. By surfacing the underlying process variables, by providing a wireless data path off the aircraft, and by integrating tag-based item-level cargo tracking with the existing cargo handling system, the system provides component-level health attribution, common-mode failure attribution across components of the cargo handling system, item-level cargo presence and placement information, item-level cargo condition information during phases of flight, and cross-fleet aggregation of operational data to support operator-specific lifing models. Data collected from cargo systems using a Wireless Sensing Module (WSM) is transmitted wirelessly to the Cloud and displayed on a web-based interface for both real-time monitoring and historical analysis, enhancing cargo management and operational efficiency. The collected data may be processed by an Message Queuing Telemetry Transport (MQTT) broker prior to being provided to an end user and displayed on the interface. Alternatively, the data may be passed directly to an end user with minimal or no processing from the MQTT broker.

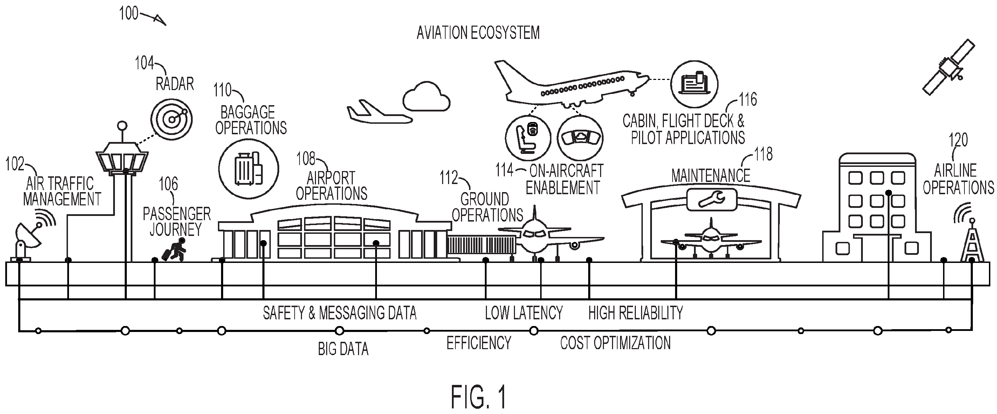

FIG. 1 illustrates an aviation ecosystem, according to some examples. The aviation ecosystem 100 in which operational domains are interconnected to support the movement of aircraft, passengers, and cargo. The aviation ecosystem 100 includes an air traffic management domain 102, a passenger journey domain 106, an airport operations domain 108, a ground operations domain 112, an on-aircraft enablement domain 114, a cabin, flight deck, and pilot applications domain 116, a maintenance domain 118, and an airline operations domain 120. The air traffic management domain 102 receives and processes radar information from surveillance radar 104 and other sources such as terminal ATC, GPS navigation, weather, and advanced air mobility.

Passengers move through the passenger journey domain 106 and the aviation ecosystem 100. The passenger journey domain 106 may include check-in solutions such as biometrics, passenger processing, and border management.

The airport operations domain 108 is coupled to the passenger journey domain 106 and includes terminals and other operations in connection with passenger handling at an airport. The airport operations domain 108 includes baggage operations 110 in connection with passengers. The baggage operations 110 are coordinated with the airport operations domain 108 to track and route baggage associated with the passengers. The baggage operations 110 includes baggage solutions (for tracking, routing, and reconciling passenger baggage as the baggage moves between a passenger, an airport, and an aircraft), resource management (for allocating and scheduling airport and airline resources, including personnel, equipment, and gates, in support of aircraft and passenger operations), and turnaround management (for coordinating the sequence of ground activities performed on an aircraft between arrival at a gate and departure from the gate).

The airport operations domain 108 is coupled to the ground operations domain 112 and provides activities performed at the airport in support of an aircraft such as fueling and baggage loading and unloading. The on-aircraft enablement domain 114 includes the cabin, flight deck, and pilot applications domain 116 used during the flight cycle. The ground operations domain 112 is also adjacent to the maintenance domain 118 in which aircraft are housed for maintenance. The airline operations domain 120 receives operations information from airport operations domain 108 and maintenance information from the maintenance domain 118 and uses the information in connection with operation of a fleet of aircraft within the aviation ecosystem 100.

In the aviation ecosystem 100, information flows from the air traffic management domain 102 through the passenger journey domain 106 and the airport operations domain 108, including the baggage operations 110, to the ground operations domain 112, and then through the on-aircraft enablement domain 114 to the cabin, flight deck, and pilot applications domain 116 and to the maintenance domain 118, and from the maintenance domain 118 to the airline operations domain 120. The aviation ecosystem 100 thereby coordinates operation of the air traffic management domain 102, the passenger journey domain 106, the airport operations domain 108, the baggage operations 110, the ground operations domain 112, the on-aircraft enablement domain 114, the cabin, flight deck, and pilot applications domain 116, the maintenance domain 118, and the airline operations domain 120 in support of one or more aircraft.

A number of regimes exist within the aviation ecosystem 100. A safety and messaging data regime is associated with the air traffic management domain 102 and the airport operations domain 108. Communications in this regime carry information used to maintain safe separation, sequencing, and routing of aircraft and information used to coordinate movement of passengers and baggage through an airport. One attribute of this regime is data integrity and authenticated delivery, because the information is used in connection with the safe and orderly handling of aircraft, passengers, and baggage.

The low latency regime is associated with the ground operations domain 112 and the on-aircraft enablement domain 114. Communications in this regime carry information that is acted upon within a bounded time interval following an event, such as information used during aircraft turnaround, loading, taxi, and flight-deck decision support. This supports time-bounded delivery of operational information into the cabin, flight deck, and pilot applications domain 116. One attribute of this regime is bounded event-to-update interval, because the information is used in connection with operations performed on or near the aircraft within a limited time window.

The high reliability regime is associated with the cabin, flight deck, and pilot applications domain 116, the maintenance domain 118, and the airline operations domain 120. Communications in this regime carry information that supports continued operation of the aircraft and the airline, including data used during the flight cycle, data used in connection with maintenance of the aircraft, and data used in connection with operation of a fleet of aircraft. In the structure of FIG. 1, the high reliability regime characterizes the links between the on-aircraft enablement domain 114, the cabin, flight deck, and pilot applications domain 116, the maintenance domain 118, and the airline operations domain 120. One attribute of this regime is sustained availability of the communication path across the flight cycle and across maintenance and operations cycles.

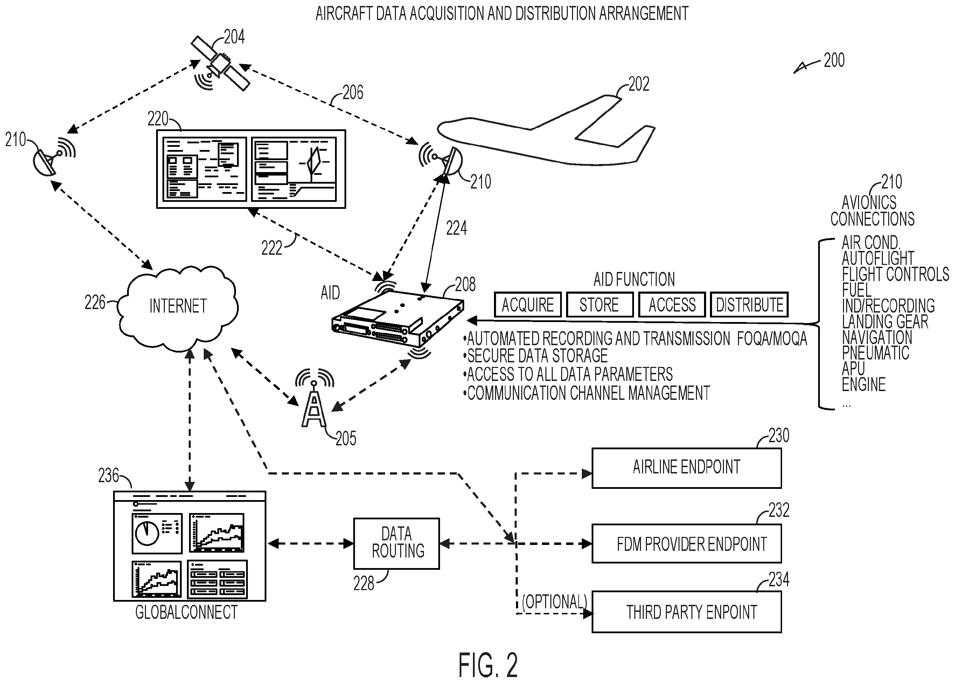

FIG. 2 illustrates an aircraft interface device, according to some examples. The aircraft interface acquisition and distribution arrangement 200 is arranged to acquire, store, access, and distribute aircraft data between avionics connections aboard an aircraft and ground-based recipients over satellite, Wi-Fi, cellular, and internet links. The aircraft data acquisition and distribution arrangement 200 acquires data from an aircraft 202 and distributes the data to one or more endpoints. The aircraft data acquisition and distribution arrangement 200 includes the aircraft 202, a satellite 204, a ground array 205, an aircraft interface device 208, an electronic flight bag application 220, an internet 226, a data routing module 228, an airline endpoint 230, a flight data monitoring provider endpoint 232, a third party endpoint 234, and a terminal 236.

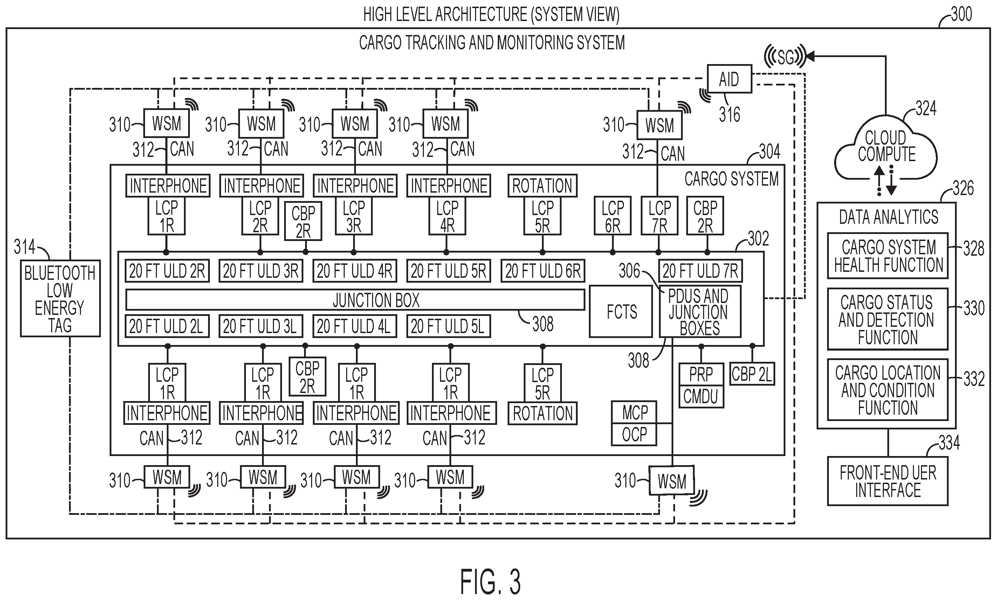

The aircraft interface device 208 in one example operates as an open application-hosting platform that provides one or more services to one or more applications hosted on the aircraft interface device 208. The one or more services include an A834 server function, a Standard Aircraft Telecommunications Application Protocol (STAP) function, an Aircraft Data Bus Protocol (ADBP) function, an Aircraft Condition Monitoring System Plus (ACMS+) engine function, a data loading engine function, and a data routing function. The applications hosted on the aircraft interface device 208 receive data from the avionics connections 210 through the services and produce one or more application outputs. The aircraft interface device 208 stores the application outputs in the data storage of the aircraft interface device 208 and distributes the application outputs to one or more endpoints in accordance with the whitelisting control. In one example, the aircraft interface device 208 holds a Supplemental Type Certificate (STC) authorizing installation of the aircraft interface device 208 on the aircraft 202, and the wireless sensing modules of FIG. 3 are integrated into the aircraft 202 within a scope of the supplemental type certificate or a dependent supplemental type certificate.

The aircraft 202 is in communication with the satellite 204 over an in-flight connectivity link 206. The in-flight connectivity link 206 carries data between the aircraft 202 and the satellite 204 during a flight cycle of the aircraft 202. The satellite 204 is in communication with the internet 226 through the ground array 205. The satellite 204 relays data between the aircraft 202 received from the in-flight connectivity link 206 to the internet 226 through the ground array 205.

The aircraft interface device 208 is disposed aboard the aircraft 202. The aircraft interface device 208 is coupled to the aircraft 202 through avionics connections 210. The avionics connections 210 carry data between one or more avionics systems of the aircraft 202 and the aircraft interface device 208. The avionics systems include an air data reference system, a communications system, an autoflight system, a flight controls system, a fuel system, an indicating and recording system, a landing gear system, a navigation system, a pneumatic system, an auxiliary power unit system, and an engine system. The aircraft interface device 208 acquires data from the one or more avionics systems through the avionics connections 210. The aircraft interface device 208 acquires data from the aircraft 202 through the avionics connections 210, stores the data, provides access to the data, and distributes the data to one or more endpoints.

The electronic flight bag application 220 is able to display information about the aircraft 202 from the aircraft interface device 208 over a communication link, such as a Wi-Fi link 222. The Wi-Fi link 222 carries data between the electronic flight bag application 220 and the aircraft interface device 208 during operation of the aircraft 202. The aircraft interface device 208 is further in communication with the internet 226 over the Wi-Fi link 222 and/or a cellular service data offload link 224. The cellular service data offload link 224 carries data between the aircraft interface device 208 and the internet 226 when the aircraft 202 is on the ground or in the air.

The data routing module 228 receives data from the aircraft interface device 208 through the internet 226. This data is routed to one or more of the airline endpoint 230, the flight data monitoring provider endpoint 232, and optionally the third party endpoint 234. The data received by the airline endpoint 230 is related to operation of the aircraft 202 by an airline. The data received by the flight data monitoring provider endpoint 232 is related to flight data monitoring associated with the aircraft 202. The data received by the third party endpoint 234 is related one or more services associated with the aircraft 202. The data routing module 228 also communicates with a terminal 236 that is able to display some or all of the data provided by the aircraft interface device 208. The various dashboards displayed by the terminal 236 may be used for fleet, user and application management.

The aircraft interface device 208 implements various AID functions that include an acquire operation, a store operation, an access operation, and a distribute operation. The acquire operation receives data from the aircraft 202 through the avionics connections 210. The store operation stores the data received through the acquire operation in a data storage of the aircraft interface device 208. The access operation provides access to the stored data through one or more of the Wi-Fi link 222, the cellular service data offload link 224, and the in-flight connectivity link 206. The distribute operation transmits the stored data from the aircraft interface device 208 to the internet 226 through one or more of the Wi-Fi link 222, the cellular service data offload link 224, and the in-flight connectivity link 206. The acquire operation includes recording and transmitting flight data acquired through the avionics connections 210. The store operation includes storing the flight data in the data storage of the aircraft interface device 208. The access operation includes providing access to one or more parameters of the flight data stored in the data storage of the aircraft interface device 208. The distribute operation includes managing one or more communication channels associated with the Wi-Fi link 222, the cellular service data offload link 224, and the in-flight connectivity link 206, and transmitting the flight data from the aircraft interface device 208 to the internet 226 through the one or more communication channels.

The aircraft interface device 208 further implements whitelisting control. The whitelisting control identifies one or more permitted data sources and one or more permitted data destinations associated with the aircraft interface device 208. The whitelisting control is administered by the aircraft interface device 208 and is applied to data exchanged between the aircraft interface device 208 and the internet 226 through one or more of the Wi-Fi link 222, the cellular service data offload link 224, and the in-flight connectivity link 206. The whitelisting control governs an inbound data flow into the aircraft interface device 208. The inbound data flow includes one or more updates received from the internet 226, including one or more of a weather update, a manual update, a flight plan update, and a company information update. The aircraft interface device 208 receives a candidate inbound data item, evaluates the candidate inbound data item against the whitelisting control, and accepts the candidate inbound data item when a source of the candidate inbound data item is identified by the whitelisting control as a permitted data source.

The whitelisting control further governs an outbound data flow from the aircraft interface device 208 to the data routing module 228 through the internet 226. The aircraft interface device 208 evaluates a candidate destination of an outbound data item against the whitelisting control and transmits the outbound data item to the candidate destination when the candidate destination is identified by the whitelisting control as a permitted data destination. The data routing module 228 receives the outbound data item from the aircraft interface device 208 through the internet 226 and routes the outbound data item to one or more of the airline endpoint 230, the flight data monitoring provider endpoint 232, and the third party endpoint 234 in accordance with the whitelisting control. The aircraft interface device 208, by administering the whitelisting control, governs the inbound data flow and the outbound data flow associated with the aircraft 202 and thereby controls the data sources and the data destinations with which the aircraft 202 exchanges data through the internet 226.

FIG. 3 illustrates a cargo tracking and monitoring system, according to some examples. FIG. 3 illustrates a cargo tracking and monitoring system 300 that acquires data from cargo and from cargo handling equipment within an aircraft cargo bay 302 and provides the data to a cloud compute environment 324 for analysis and presentation. The cargo tracking and monitoring system 300 includes the aircraft cargo bay 302, a cargo system 304, wireless sensing modules 310, low energy tags 314, an aircraft interface device 316, and the cloud compute environment 324.

The cargo system 304 is disposed within the aircraft cargo bay 302 and includes power drive units (PDUs) 306 and junction boxes 308. The power drive units 306 move cargo within the aircraft cargo bay 302. The junction boxes 308 are coupled to the power drive units 306 and provide electrical and data connections among the power drive units 306 and other components of the cargo system 304.

The wireless sensing modules 310 are distributed within the aircraft cargo bay 302 and are coupled to the cargo system 304 through controller area network links 312. The wireless sensing modules 310 acquire data from the power drive units 306 and control panels in the junction boxes 308 through the controller area network links 312. The wireless sensing modules 310 further sense the low energy tags 314 disposed within the aircraft cargo bay 302.

The low energy tags 314 are attached to cargo items disposed within the aircraft cargo bay 302. The low energy tags 314 transmit a wireless signal sensed by the wireless sensing modules 310 and identify the cargo items to which the low energy tags 314 are attached. The low energy tags 314 may use Bluetooth low energy or another short-range wireless protocol, and in one example one or more of the low energy tags 314 transmit at a 433 MHz radio frequency or operate as LoRaWAN tags. The wireless sensing modules 310 include one or more receivers configured to receive the wireless signal at the corresponding radio frequency or protocol.

The aircraft interface device 316 is disposed aboard the aircraft cargo bay 302 and is in communication with the wireless sensing modules 310. The aircraft interface device 316 receives data acquired by the wireless sensing modules 310 from the cargo system 304 and from the low energy tags 314, and forwards the data to the cloud compute environment 324 over a cellular link, a Wi-Fi link, and/or a satellite communication link. The cloud compute environment 324 includes a data analytics module 326 that processes the data to produce outputs associated with the cargo system 304 and the cargo items.

The cargo system 304 is an arrangement of movers and controllers within the aircraft cargo bay 302. The power drive units 306 of the cargo system 304 drive the cargo items along a path within the aircraft cargo bay 302 during loading and unloading of the aircraft cargo bay 302. The junction boxes 308 of the cargo system 304 carry data and power among the power drive units 306 and other components of the cargo system 304 over the controller area network links 312.

The wireless sensing modules 310 are edge nodes of the cargo tracking and monitoring system 300. Each wireless sensing module 310 acquires data from the cargo system 304 at a native data resolution of the cargo system 304 through a coupling to the controller area network links 312. The wireless sensing module 310 performs feature extraction on the acquired data. Each wireless sensing module 310 further includes a wireless receiver that senses the wireless signal transmitted by the low energy tags 314 within a sensing range of the wireless sensing module 310. In one example, the wireless sensing modules 310 are physically integrated into one or more existing local control panels of the cargo system 304. The local control panels may be mounted on a sidewall of the aircraft cargo bay 302 so that the wireless sensing modules 310 tap the controller area network links 312 between each local control panel and the power drive units 306 without modification of the cargo system 304. The wireless sensing modules 310 are distributed across controller area network buses of the controller area network links 312 so that the wireless sensing modules 310 collectively cover the controller area network buses. The number of wireless sensing modules 310 is selected based on the number of controller area network buses to be covered and the sensing range of each wireless sensing module 310 with respect to the low energy tags 314.

The aircraft interface device 316 is a gateway between the aircraft cargo bay 302 and a ground-based portion of the cargo tracking and monitoring system 300. The aircraft interface device 316 receives data from the wireless sensing modules 310, aggregates the received data, and transmits the aggregated data to the cloud compute environment 324. This transmission may be, for example, over the cellular link when the aircraft cargo bay 302 is on the ground, over the Wi-Fi link when the aircraft cargo bay 302 is within range of a Wi-Fi access point, and over the satellite communication link during a flight cycle of the aircraft cargo bay 302. Most implementations likely involve extending the wireless network between the aircraft interface device 316 and the wireless sensing modules 310. The edge nodes communicate with a wireless access point.

The cloud compute environment 324 hosts logical infrastructure that communicates with the aircraft interface device 316 and processes the data received from the aircraft interface device 316. The data analytics module 326 associated with the cloud compute environment 324 has a cargo system health function 328 that produces a cargo system health output, a cargo status and detection function 330 that produces a cargo status and detection output, and a cargo location and condition function 332 that produces a cargo location and condition output.

The cargo system health output is produced by the data analytics module 326 by processing data acquired by the wireless sensing modules 310 from the power drive units 306 through the controller area network links 312. The cargo system health output identifies of the power drive units 306 associated with a health condition or a connectivity condition.

The cargo status and detection output is produced by the data analytics module 326 by processing data acquired by the wireless sensing modules 310 from the power drive units 306 through the controller area network links 312. The cargo status and detection output identifies a loaded status or an empty status of cargo positions within the aircraft cargo bay 302.

The cargo location and condition output is produced by the data analytics module 326 by processing data acquired by the wireless sensing modules 310 from the low energy tags 314. The cargo location and condition output identifies a location of the cargo items within the aircraft cargo bay 302 and a condition of the cargo items.

The cloud compute environment 324 further provides a front-end user interface 334 that presents the cargo system health output, the cargo status and detection output, and the cargo location and condition output through a dashboard. The dashboard is accessible to users associated with operation of the aircraft cargo bay 302.

In the cargo tracking and monitoring system 300, the wireless sensing modules 310 acquire data from the cargo system 304 through the controller area network links 312 and sense the low energy tags 314 within the aircraft cargo bay 302. The aircraft interface device 316 receives the acquired data from the wireless sensing modules 310 and forwards the acquired data to the cloud compute environment 324 over of the cellular link, the Wi-Fi link, and/or the satellite communication link. The data analytics module 326 of the cloud compute environment 324 processes the forwarded data to produce the cargo system health output, the cargo status and detection output, and the cargo location and condition output, and the cloud compute environment 324 presents the outputs through the front-end user interface.

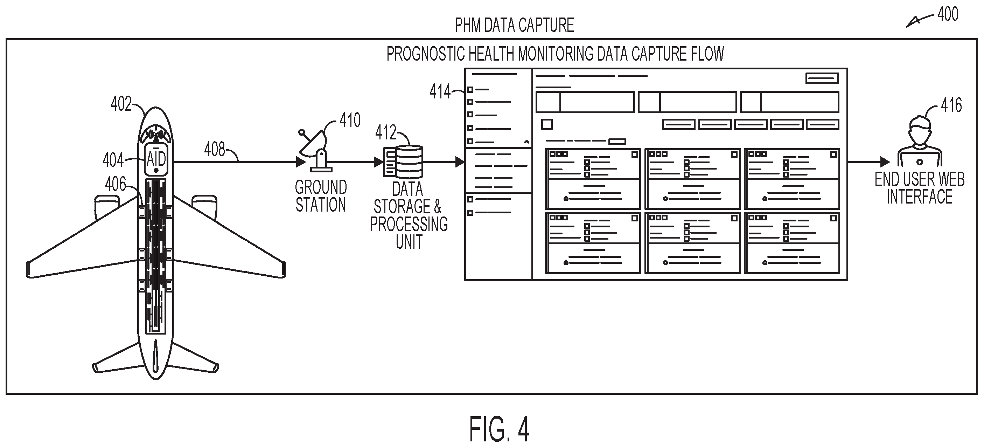

FIG. 4 illustrates a prognostic health monitoring data capture data flow, according to some examples. In particular the prognostic health monitoring data capture flow 400 is a flow by which data associated with a cargo handling system of an aircraft 402 is captured aboard the aircraft 402, transmitted from the aircraft 402 to the ground, processed, and presented to an end user. The prognostic health monitoring data capture flow 400 includes the aircraft 402, an aircraft interface device 404, a Wi-Fi link between wireless sensing module and aircraft interface device 404, a cellular or Wi-Fi link between aircraft interface device and ground station 410, a ground station 410, a data storage and processing unit 412, a raw data access service 414, and an end user web interface 416.

The aircraft 402 carries wireless sensing modules and the aircraft interface device 404. The wireless sensing modules are coupled to the cargo handling system of the aircraft 402 and acquire data associated with the cargo handling system. The aircraft interface device 404 is coupled to the wireless sensing modules through the Wi-Fi link 406 between wireless sensing module and aircraft interface device 404 and is coupled to the ground station 410 through the cellular or Wi-Fi link 408 between aircraft interface device 404 and ground station 410. The ground station 410 is coupled to the data storage and processing unit 412, and the data storage and processing unit 412 is coupled to the end user web interface 416 through the raw data access service 414.

The data obtained by the wireless sensing modules and captured by the aircraft interface device 404 may be a Maintenance Access Terminal (MAT)-destined message, which is addressed to the cargo handling system. The MAT is the on-board interface through which a maintenance technician interacts with the cargo handling system to read fault codes, view system status, and perform diagnostic operations. The cargo handling system produces a body of internal data, including internal fault monitors, internal cycle counters, and process variables. For example the system-level context for a fault condition is available to a remote technician, common-mode input failures (e.g., a controller area network bus failure that affects multiple power drive units) are distinguishable from per-unit failures, and operational counter values used for end-of-life detection or remaining useful life analysis are visible to a ground-based system. The data that is surfaced is sent over the cargo handling system's internal network as messages addressed to the MAT, where a technician reads the messages on a display at the aircraft. The wireless sensing module is coupled to the cargo handling system's internal network (the controller area network of the cargo system) and observes the network traffic carried on that network. The wireless sensing module captures the messages addressed to the MAT without itself being the addressed recipient of those messages, and forwards a copy of the captured messages off-aircraft through the aircraft interface device 404. The wireless sensing module thereby provides a path for the MAT-destined messages, and the diagnostic and prognostic information they carry, to leave the aircraft and reach the ground-based data storage and processing unit 412, where the messages can be processed and presented to an end user through the web interface 416.

The wireless sensing modules disposed within the aircraft 402 capture network traffic carried within the cargo handling system of the aircraft 402. The captured network traffic includes messages addressed to a maintenance access terminal of the cargo handling system. The wireless sensing modules acquire the messages from the network traffic without addressing the messages to the wireless sensing modules and produce a set of captured maintenance data associated with the cargo handling system. The set of captured maintenance data includes fault messages associated with components of the cargo handling system. The components of the cargo handling system include power drive units of the cargo handling system. The fault messages identify a fault condition associated with the power drive units and provide context information associated with the fault condition.

After capturing and storing the set of captured maintenance data from the wireless sensing modules, the aircraft interface device 404 transmits the set of captured maintenance data to the ground station 410 over the cellular or Wi-Fi link between aircraft interface device and ground station 410. The aircraft interface device 404 may be limited to transmitting the set of captured maintenance data to the ground station 410 once per flight cycle of the aircraft 402, at periodic intervals, or may be triggered to transmit if a specific anomaly occurs. In one example, the aircraft interface device 404 transmits the set of captured maintenance data on a push basis in response to one or more trigger conditions, which including a fault message produced by a power drive unit, a deviation of a process variable from a permitted range, a transition of an operational counter through a predetermined threshold, and a request received from the data storage and processing unit 412. In one example, the aircraft interface device 404 transmits the set of captured maintenance data on a pull basis in response to a request received from the data storage and processing unit 412 through a publish-subscribe message broker, with the request identifying one or more topic identifiers associated with one or more components of the cargo handling system. In one example, the aircraft interface device 404 transmits the set of captured maintenance data on a periodic basis at a configurable cadence, the configurable cadence being received from the data storage and processing unit 412 through the publish-subscribe message broker. The ground station 410 receives the set of captured maintenance data from the aircraft interface device 404 over the cellular or Wi-Fi link between aircraft interface device and ground station 410 and forwards the set of captured maintenance data to the data storage and processing unit 412.

Once the set of captured maintenance data is received from the ground station 410, the data storage and processing unit 412 stores the set of captured maintenance data. The data storage and processing unit 412 processes the set of captured maintenance data to produce prognostic health monitoring outputs associated with the cargo handling system of the aircraft 402. The prognostic health monitoring outputs include a component health estimate associated with the components of the cargo handling system and a remaining useful life estimate associated with the components of the cargo handling system. The data storage and processing unit 412 further produces a common-mode failure attribution by identifying a plurality of fault messages associated with a plurality of power drive units of the cargo handling system that share a common controller area network bus, a common power source, or a common upstream component, and attributing the plurality of fault messages to a single root cause associated with the common controller area network bus, the common power source, or the common upstream component. The data storage and processing unit 412 further aggregates the set of captured maintenance data across a plurality of aircraft of a fleet to produce a cross-fleet analytics output, the cross-fleet analytics output identifying one or more usage profiles associated with one or more operators of the aircraft and producing one or more operator-specific lifing models for the components of the cargo handling system based on the one or more usage profiles. The data storage and processing unit 412 produces a maintenance plan based on the cross-fleet analytics output, the one or more operator-specific lifing models, and the operational counter data, the maintenance plan transitioning from a reactive maintenance philosophy in which a component is replaced after an in-service failure to a proactive maintenance philosophy in which the component is replaced based on actual usage of the component and a predicted end-of-life of the component.

The raw data access service 414 is coupled to the data storage and processing unit 412 and provides access to the set of captured maintenance data and to the prognostic health monitoring outputs. The end user web interface 416 is coupled to the raw data access service 414 and presents the set of captured maintenance data and the prognostic health monitoring outputs to an end user. The end user is associated with operation or maintenance of the aircraft 402.

The component health estimate is an assessment of the current operating status and physical condition of a specific hardware component within the cargo handling system, such as a power drive unit, a traction device, or a control panel. The traction device is a powered roller or wheel assembly mounted in the floor of the aircraft cargo bay that engages the underside of a cargo container or pallet and drives the container along the cargo bay floor during loading and unloading. The control panel is mounted on the sidewall of the aircraft cargo bay and issues drive commands to the traction devices over the controller area network (CAN), so that an operator's inputs at the control panel are translated into coordinated actuation of selected power drive units to move cargo into, within, and out of the cargo bay. The wireless sensing modules may be integrated into one or more of control panels, which allows each wireless sensing module to tap the CAN traffic flowing between the control panel and the power drive units without modifying the cargo handling system itself

The components (for the component health estimate) generate internal process variables and fault codes (e.g., motor temperature, printed circuit board (PCB) temperature, and controller area network bus connectivity status). The system captures this data and processes the data to determine the component's health state. For example, the health estimate categorizes individual PDUs into distinct states such as "Healthy," "Degraded," or "Failed." If a PDU reports a "motor temperature out of range high" or a "loss of CAN" communication, the data analytics module updates the component health estimate for that specific PDU to a degraded or failed status. This allows operators to identify which specific units on the aircraft are experiencing anomalies before a total system failure occurs.

A remaining useful life (RUL) estimate is a calculated prediction of how much longer a specific component can continue to operate before it requires maintenance, replacement, or reaches the end of its operational lifespan. The cargo handling system components maintain internal cycle counters that increment every time a unit is actuated (for example, every time a PDU drives a cargo container into or out of the aircraft). Components located near the cargo doors experience higher cycle counts than those located deeper in the cargo bay. Furthermore, the lifespan of mechanical components, such as gearboxes within the traction devices, is a function of operating hours and load.

Historically, these cycle counters and operating hours were trapped on the aircraft, leading to a reactive "on-condition maintenance" approach. By capturing these counters via the wireless sensing modules and transmitting at least the counters to the ground-based data storage and processing unit, the system tracks the cumulative usage of each individual component. The data analytics module compares these cycle counts, operating hours, and shifts in process variables against established thresholds to output the remaining useful life estimate. This allows airline maintenance operations to transition to a proactive maintenance plan, replacing specific PDUs or gearboxes based on their actual usage and predicted end-of-life rather than waiting for an in-service failure.

The transmission of the set of captured maintenance data from the aircraft 402 to the data storage and processing unit 412 supports a remote-diagnostic capability in which a technician located off the aircraft 402 receives the set of captured maintenance data through the end user web interface 416 and performs diagnostic operations without being physically present at the aircraft 402. In one example, an aircraft is shipped from a manufacturer to an operator with a circuit breaker associated with the cargo handling system in a collared (locked-out) state. In some configurations, the operator's mechanic at the receiving facility communicates with a remote technician by transmitting one or more photographs of a maintenance display unit and error codes by a mobile phone, and the remote technician attempts to diagnose the condition based on the photographs. In other scenarios, the data storage and processing unit 412 receives the set of captured maintenance data from the aircraft 402 through the aircraft interface device 404 and presents the set of captured maintenance data through the end user web interface 416, including the fault messages produced by the power drive units, the operational counter data, and the system-level context including the state of various components of the cargo handling system upstream and downstream of the faulted component. The remote technician identifies the collared circuit breaker condition based on the system-level context presented through the end user web interface 416, without further communication with the operator's mechanic and without photographs being transmitted by the operator's mechanic.

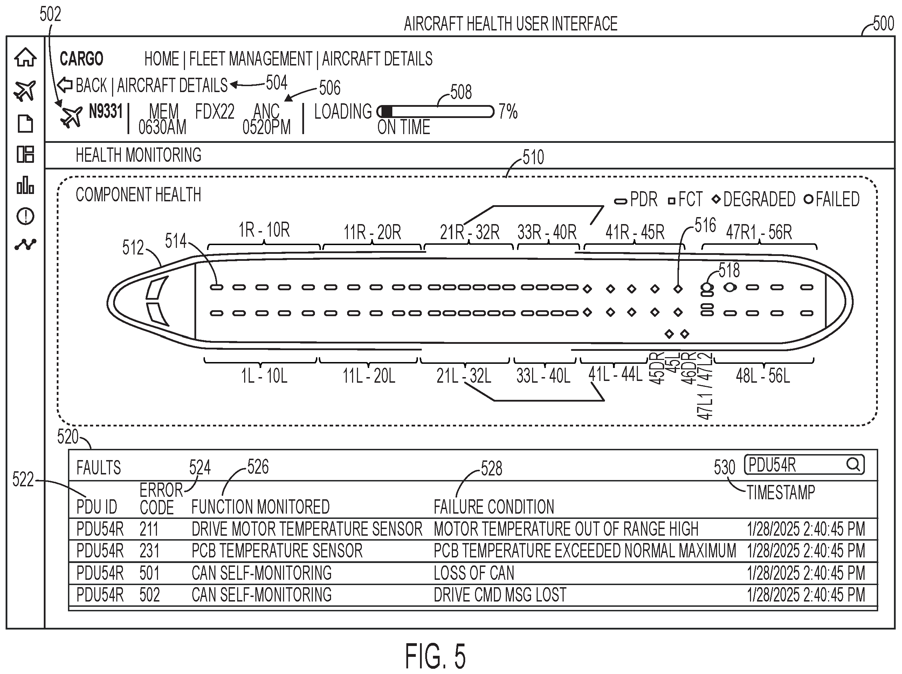

FIG. 5 illustrates an aircraft health user interface, according to some examples. The health user interface 500 includes a fuselage view that highlights faulted power drive units and a faults table filterable by power drive unit identifier. The aircraft health user interface 500 is presented to an end user through a web interface coupled to the data storage and processing unit 412 of FIG. 4. The aircraft health user interface 500 presents component health information and fault information associated with a cargo handling system of the aircraft 402 of FIG. 4. The aircraft health user interface 500 includes an aircraft identifier field 502, an aircraft model field 504, a flight information field 506, a loading status indicator 508, a component health section 510, and a faults table 520.

The aircraft identifier field 502 presents an aircraft identifier associated with the aircraft, for example a tail number of the aircraft 402. The aircraft model field 504 provides an aircraft model associated with the aircraft 402, for example a model designation of the aircraft. The flight information field 506 provides flight information associated with the aircraft. The flight information field 506 in one example includes an origin location identifier, a destination location identifier, an estimated time of departure, and an estimated time of arrival. The loading status indicator 508 provides a loading status of the aircraft, which may indicate a percentage of completion of a cargo loading operation and a schedule status associated with the cargo loading operation.

The component health section 510 provides a fuselage view 512 of the aircraft. The fuselage view 512 shows a schematic representation of the cargo handling system of the aircraft, which includes one or more power drive unit indicators 514. Each power drive unit indicator 514 represents a power drive unit of the cargo handling system of the aircraft, and each power drive unit indicator 514 is positioned within the fuselage view 512 in a location corresponding to a position of the power drive unit within the cargo handling system of the aircraft.

Each power drive unit indicator 514 represents a status of the power drive unit. The status of the power drive unit is selected from a set of status states, including a healthy status, a degraded status, and a failed status. A power drive unit indicator 514 representing a power drive unit having a healthy status is provided in a first visual style; a power drive unit indicator 514 representing a power drive unit having the degraded status is provided as a degraded status marker 516, which has a second visual style distinct from the first visual style; and a power drive unit indicator 514 representing a power drive unit having the failed status is provided as a failed status marker 518 that has a third visual style distinct from the first visual style and the second visual style. In one example, the first visual style, the second visual style, and the third visual style are differentiated by color, with the degraded status marker 516 provided in a first color and the failed status marker 518 provided in a second color distinct from the first color, so that one or more power drive units having the degraded status and one or more power drive units having the failed status are visually distinguished within the fuselage view 512.

The status provided by each power drive unit indicator 514 is derived from a component health estimate associated with the power drive unit represented by the power drive unit indicator 514. As above, the component health estimate is produced by the data storage and processing unit 412 of FIG. 4 from a set of captured maintenance data associated with the cargo handling system of the aircraft 402.

The faults table 520 shown in FIG. 5 provides one or more fault records associated with the cargo handling system of the aircraft. The faults table 520 includes a power drive unit identifier column 522, an error code column 524, a function monitored column 526, a failure condition column 528, and a timestamp column 530. Each fault record is provided as a row of the faults table 520, the row of the faults table 520 including an entry in the power drive unit identifier column 522, an entry in the error code column 524, an entry in the function monitored column 526, an entry in the failure condition column 528, and an entry in the timestamp column 530. The fault records in the faults table 520 are derived from the set of captured maintenance data associated with the cargo handling system of the aircraft.

The power drive unit identifier column 522 provides a power drive unit identifier associated with the fault record. The power drive unit identifier identifies the power drive unit of the cargo handling system of the aircraft associated with the fault record. The error code column 524 provides an error code associated with the fault record, which identifies a fault condition reported by the power drive unit identified in the power drive unit identifier column 522. The function monitored column 526 provides a function monitored associated with the fault record. The function monitored identifies a process variable or a subsystem of the power drive unit being monitored at the time of the fault condition. Examples of the function being monitored include a drive motor temperature sensor, a printed circuit board temperature sensor, and a controller area network self-monitoring function. The failure condition column 528 provides a failure condition associated with the fault record, which describes a state of the function monitored at the time of the fault condition. The failure condition may include, for example, a motor temperature out of range high condition, a printed circuit board temperature exceeded normal maximum condition, a loss of controller area network condition, and a drive command message lost condition. The timestamp column 530 provides a timestamp associated with the fault record, the timestamp identifying a date and a time at which the fault condition was reported.

The aircraft health user interface 500 provides the component health section 510 and the faults table 520 concurrently, so that the end user views the position of power drive units having the degraded status or the failed status within the fuselage view 512 and the corresponding fault records within the faults table 520 from a single view. The faults table 520 in one example supports filtering of the fault records by the power drive unit identifier provided in the power drive unit identifier column 522, so that the end user selects a power drive unit indicator 514 of interest within the fuselage view 512 and views one or more fault records associated with the selected power drive unit within the faults table 520. Although specific status states and visual styles are described herein, other states and styles (both number and specifics) may be used.

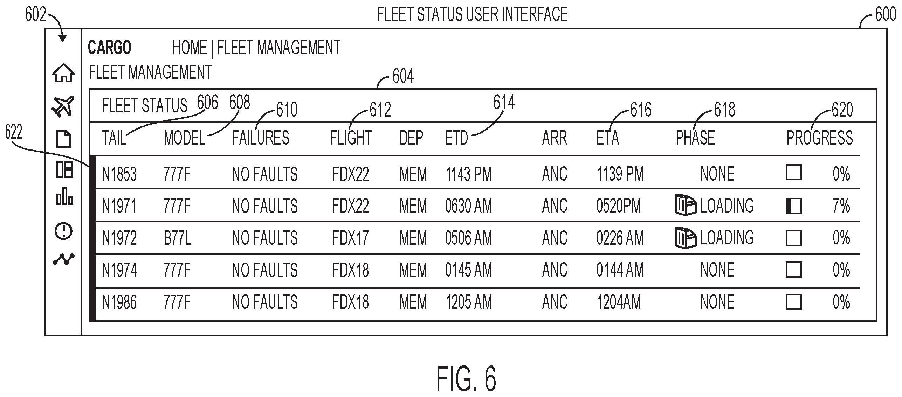

FIG. 6 illustrates a fleet status user interface, according to some examples. The fleet status user interface 600 provides operational status information for a plurality of aircraft of a fleet. Each aircraft includes a cargo handling system instrumented in accordance with the prognostic health monitoring data capture flow 400 of FIG. 4. The information may thus include tail number, model, failure indicators, flight identifier, departure time, arrival time, phase, and progress. The fleet status user interface 600 presents the data to an end user through a web interface coupled to the data storage and processing unit 412 of FIG. 4. The fleet status user interface 600 includes a navigation pane 602 and a fleet status table 604.

As shown in FIG. 6, the navigation pane 602 is presented along a side of the fleet status user interface 600. As in the other user interfaces described herein, the layout may be adjusted by the user, e.g., using a drag-and-drop type interaction. The navigation pane 602 presents selectable menu items associated with one or more views of the fleet status user interface 600. The navigation pane 602 in one example presents a fleet management menu item and a fleet status menu item. The navigation pane 602 indicates a current selection within the navigation pane 602 corresponding to a view presented in a main region of the fleet status user interface 600. Selection of a menu item within the navigation pane 602 changes the view presented in the main region of the fleet status user interface 600.

The fleet status table 604 is presented in the main region of the fleet status user interface 600. The fleet status table 604 shows one or more aircraft row entries 622. Each aircraft row entry 622 corresponds to an aircraft of the fleet. The fleet status table 604 includes information of each aircraft, such as that shown in FIG. 6: a tail number column 606, a model column 608, a failures column 610, a flight identifier column 612, a departure estimated time column 614, an arrival estimated time column 616, a phase column 618, and a progress column 620.

The tail number column 606 shows a tail number associated with the aircraft row entry 622, which identifies the aircraft corresponding to the aircraft row entry 622. The model column 608 shows a model designation associated with the aircraft row entry 622, which identifies an aircraft model of the aircraft corresponding to the aircraft row entry 622. The failures column 610 shows a failure status associated with the aircraft row entry 622, which indicates a no-fault condition and/or a fault condition associated with the cargo handling system of the aircraft corresponding to the aircraft row entry 622. The failure status presented in the failures column 610 is derived from the set of captured maintenance data associated with the cargo handling system of the aircraft with the set of captured maintenance data being captured as above by one or more wireless sensing modules disposed within the aircraft and processed by the data storage and processing unit to produce the failure status.

The flight identifier column 612 shows a flight identifier associated with the aircraft row entry 622, which identifies a flight assigned to the aircraft corresponding to the aircraft row entry 622. The departure estimated time column 614 indicates a departure estimated time associated with the aircraft row entry 622 and identifies an origin location and an estimated time of departure of the flight identified in the flight identifier column 612. The arrival estimated time column 616 similarly indicates an arrival estimated time associated with the aircraft row entry 622 and identifies a destination location and an estimated time of arrival of the flight identified in the flight identifier column 612.

The phase column 618 illustrates a phase associated with the aircraft row entry 622. The phase indicates a current operational phase of the aircraft corresponding to the aircraft row entry 622. The phase is selected from a set of operational phases that may include, for example, a loading phase, a non-loading phase, and one or more additional phases associated with operation of the aircraft. The progress column 620 indicates a progress indicator associated with the aircraft row entry 622, which identifies a percentage of completion of an operation associated with the phase identified in the phase column 618. In one example, when the phase identified in the phase column 618 is the loading phase, the progress indicator identifies a percentage of completion of a cargo loading operation associated with the aircraft corresponding to the aircraft row entry 622, which is derived from cargo presence information captured by the wireless sensing modules disposed within the aircraft.

Each aircraft row entry 622 has, for example, an entry in the tail number column 606, an entry in the model column 608, an entry in the failures column 610, an entry in the flight identifier column 612, an entry in the departure estimated time column 614, an entry in the arrival estimated time column 616, an entry in the phase column 618, and an entry in the progress column 620, so that the fleet status user interface 600 presents the operational status information for the aircraft of the fleet within a single view (dependent on screen/font size, for example). The fleet status user interface 600 presents the aircraft row entries 622 concurrently, so that the end user views the operational status information for the aircraft of the fleet from the single view and identifies one or more aircraft having the fault condition presented in the failures column 610 or the loading phase presented in the phase column 618.

The fleet status user interface 600, in one example, supports selection of an aircraft row entry 622; in response to the selection of the aircraft row entry 622, the fleet status user interface 600 presents one or more of the aircraft health user interface 500 of FIG. 5 and a cargo loading user interface associated with the aircraft corresponding to the selected aircraft row entry 622. This allows the end user to navigate from the fleet status user interface 600 to a per-aircraft view of the cargo handling system of the aircraft.

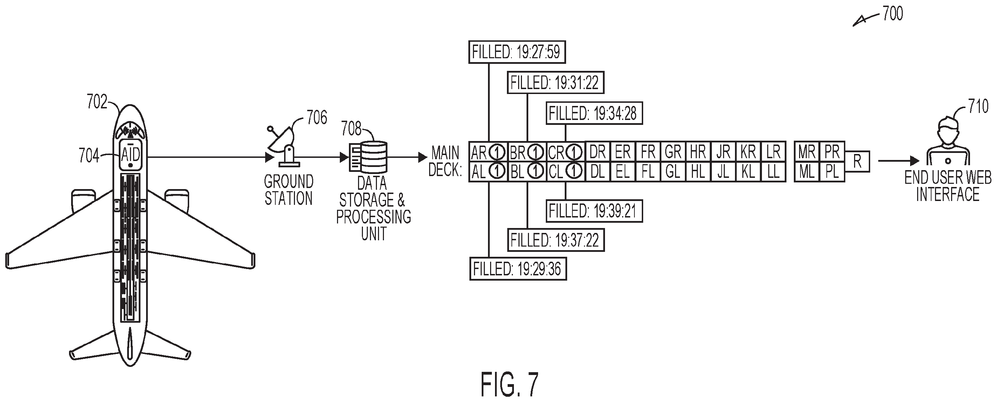

FIG. 7 illustrates a cargo presence tracking flow, according to some examples. The cargo presence tracking flow 700 shows a process by which cargo presence information associated with one or more cargo positions of an aircraft 702 is captured, transmitted from the aircraft 702 to a ground-based system, processed, and presented to an end user. The cargo presence tracking flow 700 includes the aircraft 702, an aircraft interface device 704 disposed on the aircraft 702, a ground station 706, a data storage and processing unit 708, and an end user web interface 710. The cargo presence tracking flow 700, in one example, operates in response to an event associated with one of the cargo positions of the aircraft 702 and an update presented accordingly at the end user web interface 710.

As above, the aircraft 702 includes the cargo handling system with one or more power drive units disposed within a cargo bay of the aircraft 702. Each power drive unit is associated with a cargo position of the aircraft 702. Each power drive unit includes an optical sensor (using IR and/or visible wavelengths) that produces an optical sensor output indicative of an occupied state or a non-occupied state of the cargo position associated with the power drive unit.

The aircraft 702 further includes one or more wireless sensing modules disposed within the aircraft 702. Each wireless sensing module is communicatively coupled with one or more power drive units of the cargo handling system. Each wireless sensing module reads the optical sensor output produced by the optical sensor of each power drive unit with which the wireless sensing module is communicatively coupled, and produces, based on the optical sensor output, cargo position status information identifying the occupied state or the non-occupied state of the cargo position associated with the power drive unit. Each wireless sensing module further captures aircraft door state information associated with one or more aircraft doors of the aircraft 702 and that identifies an open state or a closed state of each aircraft door of the one or more aircraft doors.

The aircraft interface device 704 is disposed on the aircraft 702 and is communicatively coupled with the wireless sensing modules. The aircraft interface device 704 receives, from each wireless sensing module, the cargo position status information and the aircraft door state information produced by the wireless sensing module. The aircraft interface device 704 transmits the cargo position status information and the aircraft door state information from the aircraft 702 to the ground station 706 over a wireless communication link (cellular and/or a Wi-Fi).

The ground station 706 receives the cargo position status information and the aircraft door state information transmitted by the aircraft interface device 704 over the wireless communication link. The ground station 706 forwards the cargo position status information and the aircraft door state information to the data storage and processing unit 708.

The data storage and processing unit 708 receives the cargo position status information and the aircraft door state information forwarded by the ground station 706. The data storage and processing unit 708 stores and processes the cargo position status information and the aircraft door state information to produce cargo presence information associated with the aircraft 702. The data storage and processing unit 708 provides a raw data access path and a value-added access path to the cargo position status information, the aircraft door state information, and the cargo presence information. The raw data access path provides the end user, or a third party authorized by the end user, with access to the cargo position status information, the aircraft door state information, and the prognostic health monitoring data substantially as captured by the wireless sensing modules without further analytical processing of the captured data. The raw data access path in one example exposes the captured data through a data delivery interface that supports retrieval of the captured data by an airline operator, a flight data monitoring provider, or a third-party recipient, so that the recipient applies independent analytics to the captured data. The value-added access path provides the end user with access to processed information derived from the cargo position status information, the aircraft door state information, and the prognostic health monitoring data by the data storage and processing unit 708. The processed information includes a component health estimate, a remaining useful life estimate, a cargo loading progress indicator, a load plan validation result, and/or a pallet condition record. The value-added access path exposes the processed information through the end user web interface 710 in the form of dashboards that include the aircraft health user interface 500 of FIG. 5 and the fleet status user interface 600 of FIG. 6, so that the end user views the processed information without performing independent analytics on the captured data.

The end user web interface 710 is communicatively coupled with the data storage and processing unit 708 over a network. The end user web interface 710 receives the cargo presence information from the data storage and processing unit 708 and presents the cargo presence information to an end user such as an airline operator or a load master associated with the aircraft 702. The end user web interface 710 presents, for each cargo position of the one or more cargo positions of the aircraft 702, the occupied state or the non-occupied state of the cargo position and a timestamp associated with a transition of the cargo position between the non-occupied state and the occupied state, so that the end user views a progress of a cargo loading operation associated with the aircraft 702 and identifies one or more delays or one or more areas of concern associated with the cargo loading operation.

The end user web interface 710 receives an update presenting the cargo presence information after the event associated with the cargo position, so that the cargo presence information presented at the end user web interface 710 reflects a recent state of the one or more cargo positions of the aircraft 702.

The cargo presence tracking flow 700 supports a tarmac-side detection mode in which the wireless sensing modules disposed within the aircraft 702 sense the tag signals broadcast by the wireless tags attached to one or more cargo items prior to closure of a cargo door of the aircraft 702. In response to a determination that a wireless tag attached to a cargo item assigned to the aircraft 702 in a load plan is not sensed by any wireless sensing module of the wireless sensing modules within a predetermined time window prior to a scheduled departure time of the aircraft 702, the data storage and processing unit 708 generates an absent item alert and transmits the absent item alert to the load master, to the airline operations center, and to a ramp agent through one or more of the end user web interface 710, an electronic mail message, a short message service message, a push notification delivered to a mobile application installed on a mobile computing device of the ramp agent, and an indication produced at a handheld terminal carried by the ramp agent. The absent item alert identifies the cargo identifier of the cargo item, the cargo position assigned to the cargo identifier in the load plan, and a recommended action to locate the cargo item at the loading area of the aircraft 702 and to load the cargo item before the scheduled departure time. In one example, the wireless sensing modules disposed within the aircraft 702 are augmented by one or more loading-area wireless sensing modules disposed at the loading area of the aircraft 702 outside the cargo bay, and the loading-area wireless sensing modules sense the tag signal broadcast by the wireless tag attached to the cargo item to confirm whether the cargo item is present at the loading area but not yet loaded into the cargo bay, supporting differentiation between a cargo item that is present at the loading area and a cargo item that is missing from the loading area entirely.

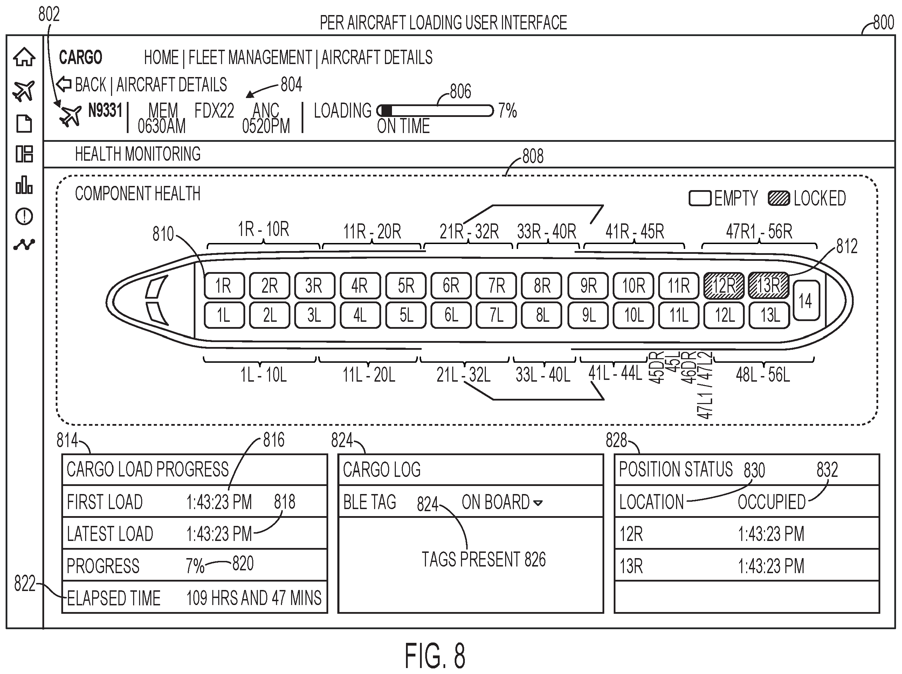

FIG. 8 illustrates a per-aircraft loading user interface, according to some examples. The per-aircraft loading user interface 800 is presented to an end user through a web interface coupled to the data storage and processing unit 708 of FIG. 7. The per-aircraft loading user interface 800 presents cargo loading information associated with a single aircraft of a fleet, which corresponds to an aircraft row entry 622 selected from the fleet status user interface 600 of FIG. 6. The per-aircraft loading user interface 800 shown in FIG. 8 includes an aircraft identifier field 802, a flight information field 804, a loading status indicator 806, a cargo bay layout view 808, a cargo load progress section 814, a cargo log section 824, and a position status table 828.

The aircraft identifier field 802 is similar to that of FIG. 6 and presents an aircraft identifier associated with the single aircraft. As above, the aircraft identifier field 802 in one example presents a tail number of the single aircraft and a model designation of the single aircraft. The flight information field 804 shows flight information associated with the single aircraft, such as an origin location identifier, a destination location identifier, an estimated time of departure, and/or an estimated time of arrival of a flight assigned to the single aircraft. The loading status indicator 806 shows a loading status of the single aircraft, e.g., a percentage of completion of a cargo loading operation associated with the single aircraft and a schedule status associated with the cargo loading operation.

The cargo bay layout view 808 presents a schematic representation of a cargo bay of the single aircraft. The cargo bay layout view 808 includes cargo position indicators 810, each of which represents a cargo position of one or more cargo positions of the cargo bay of the single aircraft. Each cargo position indicator 810 is positioned within the cargo bay layout view 808 in a location corresponding to a position of the cargo position within the cargo bay of the single aircraft. Each cargo position indicator 810 is associated with a cargo position label that identifies the cargo position by a row designation and a side designation. In the example shown in FIG. 8, the side designation shows a left side of the cargo bay and/or a right side of the cargo bay.

Each cargo position indicator 810 indicates an occupied state or a non-occupied state of the cargo position represented by the cargo position indicator 810. A cargo position indicator 810 representing a cargo position having an occupied state is presented as a highlighted occupied position 812, e.g., in a visual style distinct from a visual style of a cargo position indicator 810 representing a cargo position having the non-occupied state. This allows cargo positions having the occupied state to be visually distinguished within the cargo bay layout view 808.

The occupied state or the non-occupied state presented by each cargo position indicator 810 is derived from cargo position status information associated with the cargo position represented by the cargo position indicator 810. As in the other examples, the cargo position status information is captured by one or more wireless sensing modules disposed within the aircraft, transmitted to the data storage and processing unit 708 through the cargo presence tracking flow 700 of FIG. 7, and processed by the data storage and processing unit 708 to produce the occupied state or the non-occupied state.

The cargo load progress section 814 also shows one or more progress metrics associated with the cargo loading operation of the single aircraft. The cargo load progress section 814 includes a first load timestamp 816, a latest load timestamp 818, a progress percentage 820, and an elapsed time field 822. The first load timestamp 816 presents a date and a time of a first transition of any cargo position from the non-occupied state to the occupied state during the cargo loading operation. The latest load timestamp 818 presents a date and a time of a most recent transition of any cargo position of the one or more cargo positions of the cargo bay of the single aircraft from the non-occupied state to the occupied state during the cargo loading operation. The progress percentage 820 presents a percentage of the one or more cargo positions of the cargo bay of the single aircraft having the occupied state. The elapsed time field 822 presents a duration between the first load timestamp 816 and the latest load timestamp 818, or between the first load timestamp 816 and the current time.

The cargo log section 824 presents cargo log entries associated with the cargo loading operation of the aircraft. The cargo log section 824 includes a tags present indicator 826 that indicate the presence of one or more wireless tags associated with one or more cargo items being loaded into the cargo bay of the aircraft. The wireless tags, in one example, include Bluetooth low energy tags that are attached to a cargo item of the one or more cargo items. The tags present indicator 826 further presents a count of the wireless tags sensed by the wireless sensing modules within the aircraft.

The position status table 828 shows one or more position status records associated with the cargo positions. The position status table 828 includes a location column 830 and an occupied column 832. Each position status record is presented as a row of the position status table 828. The row of the position status table 828 includes an entry in the location column 830 and an entry in the occupied column 832. The location column 830 provides the cargo position label associated with the position status record, which identifies the cargo position of the cargo bay associated with the position status record. The occupied column 832 shows an occupied timestamp associated with the position status record that indicates a date and a time of a transition of the cargo position identified in the location column 830 from the non-occupied state to the occupied state.

The position status records presented in the position status table 828 are derived from the cargo position status information captured by the one or more wireless sensing modules disposed within the aircraft and processed by the data storage and processing unit 708 of FIG. 7.

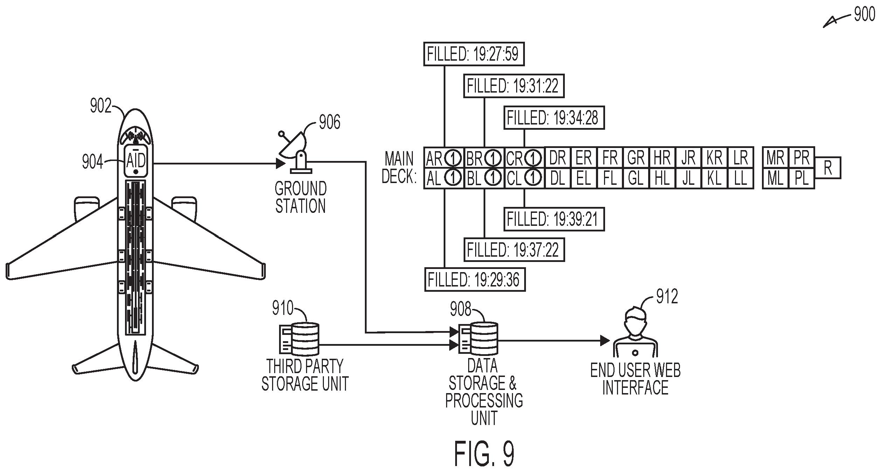

FIG. 9 illustrates a load sensing and reporting flow, according to some examples. The load sensing and reporting flow 900 shows a process by which cargo identifier information and cargo position information associated with one or more cargo items loaded onto an aircraft 902 are captured, transmitted from the aircraft 902 to a ground-based system, processed, and presented to an end user. The load sensing and reporting flow 900 includes the aircraft 902, an aircraft interface device 904 disposed on the aircraft 902, a ground station 906, a data storage and processing unit 908, a third party storage unit 910, and an end user web interface 912. The load sensing and reporting flow 900 in response to an event associated with a cargo item of the cargo items loaded onto the aircraft 902 and an update presented at the end user web interface 912.

The aircraft 902 includes a cargo bay that has one or more cargo positions. One or more cargo items are loaded into the cargo bay during a cargo loading operation. Each cargo item has a wireless tag (e.g., Bluetooth low energy tag) attached thereto. The tag signal carries a cargo identifier associated with the cargo item.

The aircraft 902 further includes wireless sensing modules disposed within the aircraft 902 that are distributed within the cargo bay so that the wireless sensing modules collectively sense the tag signal broadcast by the wireless tag attached to each cargo item as the cargo item enters the cargo bay and moves through the cargo bay. Each wireless sensing module receives the tag signal broadcast by the wireless tag attached to a cargo item and produces, based on the tag signal, sensed tag information including the cargo identifier carried by the tag signal, a cargo position of the cargo item within the cargo bay, and a loading timestamp associated with the cargo item.

The aircraft interface device 904 is disposed on the aircraft 902 and is communicatively coupled with the wireless sensing modules. The aircraft interface device 904 receives, from each wireless sensing module, the sensed tag information produced by the wireless sensing module. The aircraft interface device 904 transmits the sensed tag information from the aircraft 902 to the ground station 906 over a wireless communication link (cellular and/or Wi-Fi).

The ground station 906 receives the sensed tag information transmitted by the aircraft interface device 904 over the wireless communication link. The ground station 906 forwards the sensed tag information to the data storage and processing unit 908. The data storage and processing unit 908 receives the sensed tag information forwarded by the ground station 906. The data storage and processing unit 908 stores the sensed tag information and processes the sensed tag information to produce load sensing information associated with the aircraft 902, that identifies for each cargo item. The cargo identifier indicates the cargo position of the cargo item within the cargo bay and the loading timestamp of the cargo item.

The third party storage unit 910 is communicatively coupled with the data storage and processing unit 908 and provides tag context information and/or a load plan to the data storage and processing unit 908. The tag context information identifies, for each cargo identifier, one or more attributes associated with the cargo item identified by the cargo identifier. The attributes include a description of the cargo item, a destination of the cargo item, a weight of the cargo item, and/or a hazard classification of the cargo item. The load plan identifies, for each cargo position, a planned cargo identifier assigned to the cargo position. The data storage and processing unit 908 combines the sensed tag information with the tag context information and the load plan received from the third party storage unit 910 to produce the load sensing information.

The end user web interface 912 is communicatively coupled with the data storage and processing unit 908 over a network. The end user web interface 912 receives the load sensing information from the data storage and processing unit 908 and presents the load sensing information to an end user (e.g., airline operator or load master). The end user web interface 912 presents, for each cargo item, the cargo identifier of the cargo item, the cargo position of the cargo item within the cargo bay, the loading timestamp of the cargo item, and/or an order of loading of the cargo items. The end user identifies which cargo items have been loaded onto the aircraft 902, in which cargo positions the cargo items have been loaded, and at what times and in what order the cargo items have been loaded. The end user web interface 912 receives an update presenting the load sensing information within a predetermined time after the event associated with the cargo item.

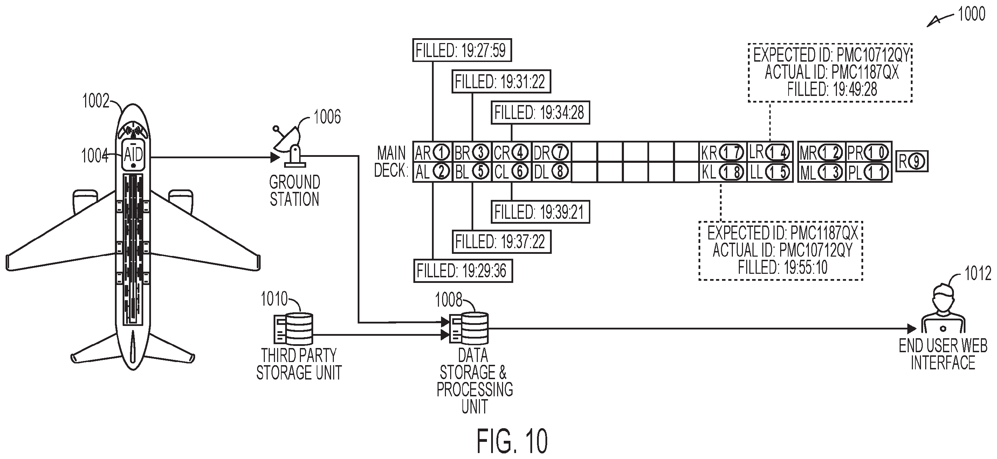

FIG. 10 illustrates a load validation flow, according to some examples. The load validation flow 1000 illustrates one manner in which a sensed cargo configuration of an aircraft 1002 is captured, compared with a load plan, and presented to an end user as a load validation result. The load validation flow 1000 includes the aircraft 1002, an aircraft interface device 1004 disposed on the aircraft 1002, a ground station 1006, a data storage and processing unit 1008, a third party storage unit 1010, and an end user web interface 1012. The load validation flow 1000 in one example operates in response to an event associated with a cargo item loaded onto the aircraft 1002 and an update is then presented at the end user web interface 1012.

The aircraft 1002 includes a cargo bay with one or more cargo positions. One or more cargo items are loaded into the cargo bay during a cargo loading operation. Each cargo item has a wireless tag attached to the cargo item that carries a cargo identifier associated with the cargo item.

The aircraft 1002 further includes wireless sensing modules disposed within the aircraft 1002 and arranged as a network distributed within the cargo bay so that the network collectively senses the tag signal broadcast by the wireless tag attached to each cargo item at one or more locations within the cargo bay. The network triangulates the tag signal broadcast by the wireless tag attached to a cargo item based on a plurality of measurements of the tag signal received at a plurality of wireless sensing modules of the network. The network then produces, based on the triangulation, a final resting position of the cargo item within the cargo bay. The triangulation in one example is based on a received signal strength indication of the tag signal received at each wireless sensing module and/or an angle of arrival of the tag signal received at each wireless sensing module (e.g., RSSI, angle of arrival). In addition or instead, other methods may be used such as ultra-wide-band time of flight (TOF). In one example, the network applies a motion model to the measurements to track the cargo item as the cargo item moves through the cargo bay. The motion model may be implemented by an object tracking algorithm such as a Kalman filter operating on the received signal strength indication, on the angle of arrival, or on a combination of the received signal strength indication and the angle of arrival. The Kalman filter is reset in response to a sensor transition indication produced by an optical sensor of a power drive unit of the cargo handling system. The sensor transition indication identifies a passage of the cargo item across a boundary associated with the power drive unit, so that the sensor transition indication serves as a ground-truth reset for the motion model in a manner analogous to a fusion of inertial-navigation data with global-positioning-system data. The fusion of the wireless tag-derived position data with the sensor transition indication produced by the cargo handling system produces a refined cargo position having an accuracy greater than an accuracy of a position produced from the received signal strength indication alone, supporting determination of whether a cargo item has come to rest at a planned cargo position assigned in the load plan. The network produces sensed cargo configuration information that identifies, for each cargo item, the cargo identifier of the cargo item and the final resting position of the cargo item within the cargo bay.

The aircraft interface device 1004 is disposed on the aircraft 1002 and is communicatively coupled with the network. The aircraft interface device 1004 receives the sensed cargo configuration information from the network and transmits the sensed cargo configuration information from the aircraft 1002 to the ground station 1006 over a wireless communication link. The ground station 1006 receives the sensed cargo configuration information transmitted by the aircraft interface device 1004 over the wireless communication link. The ground station 1006 forwards the sensed cargo configuration information to the data storage and processing unit 1008.

The data storage and processing unit 1008 receives the sensed cargo configuration information forwarded by the ground station 1006. The third party storage unit 1010 is communicatively coupled with the data storage and processing unit 1008 and provides tag context information and/or a load plan to the data storage and processing unit 1008. The load plan identifies, for each cargo position, a planned cargo identifier assigned to the cargo position.

The data storage and processing unit 1008 compares the sensed cargo configuration information with the load plan to produce a load validation result. The load validation result indicates, for each cargo item, a match condition (i.e., the cargo item is in the correct location within the cargo bay) or a mismatch condition (i.e., the cargo item is in an incorrect location within the cargo bay) between the final resting position of the cargo item identified in the sensed cargo configuration information and a planned cargo position assigned to the cargo identifier of the cargo item in the load plan. The load validation result further identifies progress of the cargo loading operation and accuracy of the cargo loading operation relative to the load plan.

The end user web interface 1012 is communicatively coupled with the data storage and processing unit 1008 over a network. The end user web interface 1012 receives the load validation results from the data storage and processing unit 1008 and presents the load validation results to an end user. The end user web interface 1012 presents, for each cargo item, the cargo identifier of the cargo item, the final resting position of the cargo item within the cargo bay, and the match condition or the mismatch condition between the final resting position of the cargo item and the planned cargo position assigned to the cargo identifier of the cargo item in the load plan. This permits the end user to identify any cargo items being in an incorrect location and enables corrective action to be taken with respect to such cargo items. The end user web interface 1012 receives an update presenting the load validation result after the event associated with the cargo item.

Examples of corrective action are provided. In some examples, the data storage and processing unit receives the sensed cargo configuration information from the network of wireless sensing modules through the aircraft interface device and the ground station and compares the sensed cargo configuration information with the load plan received from the third party storage unit to produce the load validation result. For each cargo item of one or more cargo items, the load validation result identifies one or more of a match condition and a mismatch condition. The mismatch condition includes a position mismatch (the cargo item is at an actual final resting position different from the planned cargo position assigned to a cargo identifier of the cargo item in the load plan), an item mismatch (a cargo identifier sensed at a cargo position is different from a planned cargo identifier assigned to the cargo position in the load plan), an absent item condition (a planned cargo identifier assigned to a cargo position in the load plan is not sensed at any cargo position of the cargo bay), an unexpected item condition (a cargo identifier is sensed within the cargo bay that is not assigned to any cargo position in the load plan), an order mismatch (a loading order of the one or more cargo items deviates from a planned loading order assigned in the load plan), and a hazardous-material proximity mismatch (a cargo item carrying a hazardous-material classification in the tag context information is sensed at a cargo position that violates a separation rule (or alignment with a position capable of suppressing fire) with respect to another cargo item or a passenger compartment).

In response to identification of the mismatch condition, the data storage and processing unit generates a corrective action record. The corrective action record identifies the cargo identifier of the cargo item, the actual final resting position of the cargo item, the planned cargo position assigned to the cargo identifier in the load plan, the type of mismatch condition, a severity classification of the mismatch condition, and one or more recommended corrective actions associated with the mismatch condition. The severity classification includes a low severity, a medium severity, and a high severity, the high severity being assigned in one example to a hazardous-material proximity mismatch or to a mismatch that affects a weight-and-balance constraint of the aircraft.

In response to generation of the corrective action record, the data storage and processing unit transmits one or more alerts through the end user web interface and through one or more additional communication channels to one or more entities. The entities include a load master associated with the aircraft, an airline operations center, an airline maintenance organization, a cargo operator, a ground handling supervisor, a ramp agent, a cargo carrier, a freight forwarder, a hazardous-material coordinator, a flight crew of the aircraft, an airport operations entity, and a regulatory entity. Each alert identifies the cargo identifier of the cargo item, the actual final resting position of the cargo item, the planned cargo position, the type of mismatch condition, the severity classification, and the one or more recommended corrective actions.

The additional communication channels include an electronic mail message, a short message service message, a push notification delivered to a mobile application installed on a mobile computing device of an entity, an audible annunciation produced at a loading area annunciator disposed at a loading area of the aircraft, a visual annunciation produced at a visual annunciator disposed at the loading area of the aircraft, an indication produced at a handheld terminal carried by a ramp agent, an indication produced at a maintenance access terminal of the aircraft, an indication produced at a flight deck display of the aircraft, and an entry written to an airline operations dashboard.

The end user web interface presents, in response to receipt of the corrective action record, an alert presentation including a graphical highlight of the cargo position of the cargo item within the cargo bay layout view 808 of the per-aircraft loading user interface 800 of FIG. 8, the graphical highlight being presented in a visual style distinct from the highlighted occupied position 812 to indicate the mismatch condition, the visual style being further differentiated based on the severity classification of the mismatch condition. The end user web interface further presents, within the position status table 828 of the per-aircraft loading user interface 800, an entry identifying the cargo position, the cargo identifier sensed at the cargo position, and the type of mismatch condition. The end user web interface further presents, within the alert presentation, the recommended corrective actions and selectable controls associated with each recommended corrective action, so that an end user selects one of the recommended corrective actions to be carried out.

The cargo handling system of the aircraft includes power drive units disposed beneath cargo positions of the cargo bay. The power drive units include traction devices, drive motors, and rollers. The rollers are engageable with a lower surface of a cargo item to translate the cargo item along a longitudinal axis of the cargo bay or along a lateral axis of the cargo bay. The cargo handling system further includes local control panels and a master control panel that are communicatively coupled with the power drive units over a controller area network bus.

In response to receipt of a selection of a recommended corrective action of the recommended corrective actions presented at the end user web interface, the data storage and processing unit transmits a relocation command to a human operator or to the master control panel through the aircraft interface device. The relocation command identifies the cargo identifier of the cargo item, the actual final resting position of the cargo item, and a target cargo position. The target cargo position is the planned cargo position assigned to the cargo identifier in the load plan, an alternative cargo position derived from a re-optimized load plan, or an off-aircraft staging position adjacent to a door of the aircraft.

The master control panel, in response to receipt of the relocation command, generates drive commands to the power drive units along a path between the actual final resting position and the target cargo position. The drive commands operate the rollers of the power drive units along the path to translate the cargo item from the actual final resting position to the target cargo position. The network of wireless sensing modules monitors the tag signal broadcast by the wireless tag attached to the cargo item during the operation of the power drive units and produces an updated final resting position of the cargo item. The updated final resting position is transmitted to the data storage and processing unit through the aircraft interface device and the ground station.

In one example, the relocation command includes a multi-step relocation in which a first cargo item is translated from a first actual final resting position to an intermediate cargo position to clear a path for a second cargo item, the second cargo item is translated from a second actual final resting position to a planned cargo position assigned to the second cargo item, and the first cargo item is translated from the intermediate cargo position to a planned cargo position assigned to the first cargo item. The data storage and processing unit generates the multi-step relocation by computing a sequence of intermediate cargo positions and a sequence of drive commands that resolves a position-conflict graph among the one or more cargo items having the mismatch condition.

In an alternative or additional corrective action, one or more cargo items are physically relocated by a ramp agent or a load master with operation of the power-drive-units by interacting with the control panels. The end user web interface presents, within the alert presentation, a relocation instruction identifying the cargo item to be relocated, the actual final resting position of the cargo item, and the target cargo position. The relocation instruction is delivered to a handheld terminal carried by the ramp agent or to a mobile application installed on a mobile computing device of the load master. The handheld terminal or the mobile application presents a step-by-step relocation guide identifying the cargo item, the actual final resting position, the target cargo position, and one or more intermediate cargo positions if a multi-step relocation is required.

In one example, the manual physical relocation includes a removal of the cargo item from the aircraft through a cargo door, a translation of the cargo item along the cargo bay using a manual roller, a re-engagement of the cargo item with the one or more power drive units at a different cargo position, and/or a placement of the cargo item at the target cargo position. The handheld terminal or the mobile application captures, in response to completion of each step, a confirmation input from the ramp agent or the load master, and transmits the confirmation input to the data storage and processing unit. The network of wireless sensing modules confirms, based on a re-sensing of the tag signal broadcast by the wireless tag attached to the cargo item, that the cargo item is at the target cargo position.

In an alternative corrective action, in response to identification of the mismatch condition, the data storage and processing unit produces a candidate revised load plan, the candidate revised load plan reflecting the actual final resting positions of the cargo items as a basis for an updated allocation of cargo positions. The candidate revised load plan is evaluated against one or more constraints of the aircraft. The constraints include a weight-and-balance constraint, a hazardous-material separation constraint, a temperature-controlled cargo placement constraint, a live-animal placement constraint, a maximum-cargo-position-load constraint, and a center-of-gravity constraint. The constraints may be received from the third party storage unit or from a constraint database of the data storage and processing unit.

If the candidate revised load plan satisfies the constraints, the end user web interface presents the candidate revised load plan to one or more entities for approval. The entities include the load master, the airline operations center, the cargo carrier, and the freight forwarder. In response to receipt of an approval input through the end user web interface, the data storage and processing unit stores the candidate revised load plan as a current load plan associated with the aircraft, transmits the current load plan to the third party storage unit, and generates an updated weight-and-balance report associated with the aircraft. The updated weight-and-balance report is transmitted to the flight deck display of the aircraft and to the airline operations center. If the candidate revised load plan does not satisfy the constraints, the data storage and processing unit produces one or more recommended physical relocations of one or more cargo items as the corrective action, in accordance with the above description.

In one example, the data storage and processing unit 1008 supports a configurable approval workflow corresponding to an organizational structure of an operator of the aircraft 1002. For a first operator, the approval workflow is an aircraft-level workflow in which the candidate revised load plan is presented to the load master associated with the aircraft 1002 and approved by the load master through the end user web interface 1012 or through the mobile application without further escalation. For a second operator, the approval workflow is a centralized-operations-level workflow in which the candidate revised load plan is presented to the load master associated with the aircraft 1002, escalated by the data storage and processing unit 1008 to the airline operations center, and approved by the airline operations center through the end user web interface 1012 before the candidate revised load plan is stored as the current load plan. The data storage and processing unit 1008 selects the approval workflow based on an operator profile received from the third party storage unit 1010, with the operator profile identifying the operator and the corresponding approval workflow.

The corrective action record further triggers one or more logistical actions at the aircraft level and at the broader logistics level. The logistical actions include: (i) a hold of a departure of the aircraft, the data storage and processing unit transmitting a hold notification to the airline operations center and to the flight crew through the flight deck display of the aircraft; (ii) a re-sequencing of a remaining loading operation, the data storage and processing unit producing an updated loading sequence and transmitting the updated loading sequence to the handheld terminal carried by the ramp agent and to the mobile application of the load master; (iii) a removal of a cargo item from the aircraft and a re-routing of the cargo item to a different aircraft. The data storage and processing unit produces a re-routing record and transmitting the re-routing record to the cargo carrier, the freight forwarder, and the airport operations entity; (iv) an addition of a replacement cargo item to a manifest of the aircraft. In this case, the replacement cargo item is identified from a pool of staged cargo items at a cargo terminal and the data storage and processing unit produces an addition record and transmits the addition record to the cargo carrier and the freight forwarder; (v) an initiation of a substitute shipment for a cargo item experiencing an out-of-bounds condition or that has been removed from the aircraft. The data storage and processing unit produces a substitute shipment request and transmits the substitute shipment request to the cargo carrier or the freight forwarder so that the substitute shipment is placed in a downstream pipeline before the aircraft lands at a destination; (vi) a notification to a downstream station along a milk-run route of the aircraft. The notification identifies the corrective action and any change in cargo manifest associated with a leg of the milk-run route, so that ground handling at the downstream station is adjusted; (vii) a generation of a regulatory record. The regulatory record documents the mismatch condition, the corrective action taken, and the verification of the corrective action. The regulatory record is archived by the data storage and processing unit in support of compliance with cargo handling safety regulations; and (viii) an update of a maintenance task in response to a determination that the mismatch condition was caused at least in part by a fault in the cargo handling system, the maintenance task being generated by the data storage and processing unit in coordination with the prognostic health monitoring flow described in connection with FIG. 5, with the maintenance task being transmitted to the airline maintenance organization.

In response to completion of the corrective action, the network of wireless sensing modules re-senses the cargo items within the cargo bay of the aircraft and produces an updated sensed cargo configuration information. The updated sensed cargo configuration information is transmitted to the data storage and processing unit through the aircraft interface device and the ground station. The data storage and processing unit compares the updated sensed cargo configuration information with the current load plan and produces an updated load validation result. The updated load validation result identifies, for each cargo item, a match condition and/or a residual mismatch condition. If the updated load validation result identifies a residual mismatch condition, the corrective action is repeated until the updated load validation result indicates a match condition for each cargo item.

In response to a determination that the updated load validation result indicates the match condition for each cargo item, the data storage and processing unit generates a load validation completion record and transmits the load validation completion record to the load master, the airline operations center, the cargo carrier, the freight forwarder, and the flight deck display of the aircraft. The load validation completion record authorizes closure of a cargo door of the aircraft and release of the aircraft for departure. The closure of the cargo door is in one example carried out by an actuation of a door drive system of the aircraft in response to receipt of the load validation completion record at the master control panel, subject to confirmation by the load master through the end user web interface or the mobile application.

In one example, the mismatch condition is the position mismatch, and the corrective action includes the relocation command, in which the power drive units translate the cargo item from the actual final resting position to the planned cargo position.

In one example, the mismatch condition is the hazardous-material proximity mismatch, the severity classification is the high severity, and the corrective action includes (i) the alert delivered to the hazardous-material coordinator, (ii) a hold of the departure of the aircraft, (iii) the relocation command in which the cargo item is translated to a planned cargo position satisfying the separation rule, and (iv) the regulatory record.

In one example, the mismatch condition is the absent item condition, and the corrective action includes (i) the alert delivered to the cargo carrier and the freight forwarder, (ii) the addition of the replacement cargo item to the manifest, and (iii) the update of the load plan.

In one example, the mismatch condition is the unexpected item condition, and the corrective action includes (i) the alert delivered to the cargo operator and the freight forwarder, (ii) a removal of the unexpected cargo item from the aircraft, and (iii) the re-routing record.

In one example, the mismatch condition is the order mismatch on a milk-run route, and the corrective action includes (i) the relocation command to re-order the one or more cargo items in accordance with the planned loading order, supporting subsequent partial offloading at one or more downstream stations, and (ii) the notification to the downstream station.

In one example, the aircraft 1002 operates on a milk-run route having a sequence of stops, and one or more cargo items are loaded onto the aircraft 1002 in a planned loading order corresponding to a planned offloading order at the sequence of stops, so that one or more cargo items destined for an earlier stop in the milk-run route are loaded later in the planned loading order and are positioned closer to a cargo door of the aircraft 1002 to be removed first at the earlier stop. The load plan received from the third party storage unit 1010 identifies the planned loading order and the planned offloading order, and the data storage and processing unit 1008 produces a milk-run mismatch determination by comparing the loading order of the cargo items identified in the sensed cargo configuration information with the planned loading order. In response to the milk-run mismatch determination, the data storage and processing unit 1008 generates a milk-run corrective action record identifying the cargo items to be re-ordered, the relocation commands to be executed, and the downstream stations affected by the milk-run mismatch determination, and transmits the milk-run corrective action record to the load master, to the airline operations center, and to ground handling supervisors at the downstream stations.

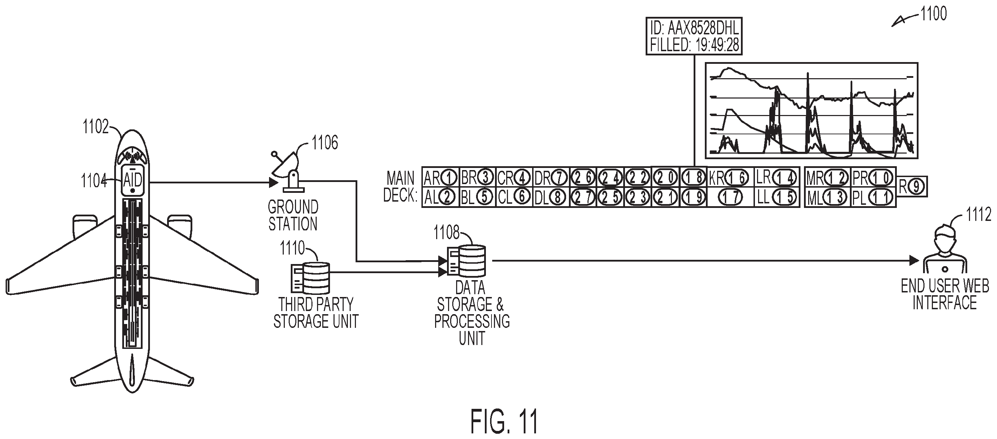

FIG. 11 illustrates an in-flight cargo monitoring flow, according to some examples. The in-flight cargo monitoring flow 1100 describes how one or more pallet conditions associated with one or more cargo pallets carried by an aircraft 1102 are captured during one or more phases of flight of the aircraft 1102, transmitted from the aircraft 1102 to a ground-based system, processed, and presented to an end user. The in-flight cargo monitoring flow 1100 includes the aircraft 1102, an aircraft interface device 1104 disposed on the aircraft 1102, a ground station 1106, a data storage and processing unit 1108, a third party storage unit 1110, and an end user web interface 1112. The in-flight cargo monitoring flow 1100 in one example operates in response to an event associated with a pallet condition, and an update is then presented at the end user web interface 1112, subject to availability of a wireless communication link between the aircraft 1102 and the ground station 1106.

The aircraft 1102 includes a cargo bay carrying one or more cargo pallets. Each cargo pallet has a wireless tag attached thereto that contains one or more pallet condition sensors and broadcasts a tag signal carrying a cargo identifier associated with the cargo pallet and pallet condition information produced by the pallet condition sensors. The pallet condition information identifies one or more pallet conditions associated with the cargo pallet. The pallet conditions include a temperature of the cargo pallet, a humidity of the cargo pallet, a vibration of the cargo pallet, and/or a location of the cargo pallet.

The aircraft 1102 further includes one or more wireless sensing modules disposed within the aircraft 1102 and that are communicatively coupled with the wireless tag attached to each cargo pallet. Each wireless sensing module receives the tag signal broadcast by the wireless tag attached to a cargo pallet during the flight phases and produces sensed pallet condition information. The sensed pallet condition information includes the cargo identifier carried by the tag signal and the pallet condition information carried by the tag signal. The flight phases include a pre-flight phase, a taxi phase, a take-off phase, a cruise phase, a descent phase, a landing phase, and a post-flight phase.

The aircraft interface device 1104 on the aircraft 1102 is communicatively coupled with the wireless sensing modules. The aircraft interface device 1104 receives the sensed pallet condition information from each wireless sensing module and transmits the sensed pallet condition information from the aircraft 1102 to the ground station 1106 over a wireless communication link. The aircraft interface device 1104 transmits the sensed pallet condition information based on availability of the wireless communication link between the aircraft 1102 and the ground station 1106. The aircraft interface device 1104 may attempt to transmit the sensed pallet condition information substantially in real time during the flight phases of the aircraft 1102 when the wireless communication link is available, and the aircraft interface device 1104 stores the sensed pallet condition information and transmitting the stored sensed pallet condition information to the ground station 1106 after the post-flight phase of the aircraft 1102 when the wireless communication link is unavailable during the flight phases.

The ground station 1106 receives the sensed pallet condition information transmitted by the aircraft interface device 1104 over the wireless communication link. The ground station 1106 forwards the sensed pallet condition information to the data storage and processing unit 1108. The data storage and processing unit 1108 receives the sensed pallet condition information forwarded by the ground station 1106. The third party storage unit 1110 is communicatively coupled with the data storage and processing unit 1108 and provides tag context information and a load plan to the data storage and processing unit 1108. The tag context information identifies, for each cargo identifier, one or more attributes associated with the cargo pallet identified by the cargo identifier. The attributes include a description of the cargo pallet, a destination of the cargo pallet, and a sensitivity classification of the cargo pallet. The sensitivity classification in one example identifies the cargo pallet as a medical cargo pallet, a pharmaceutical cargo pallet, a cold chain cargo pallet, and a vibration-sensitive cargo pallet.

The data storage and processing unit 1108 stores the sensed pallet condition information and processes the sensed pallet condition information in combination with the tag context information and the load plan received from the third party storage unit 1110 to produce in-flight cargo monitoring information associated with the one or more cargo pallets. The in-flight cargo monitoring information identifies, for each cargo pallet, the cargo identifier of the cargo pallet, a time history of the pallet conditions of the cargo pallet during the flight phases of the aircraft 1102, and an in-bounds condition/an out-of-bounds condition of the pallet conditions of the cargo pallet relative to thresholds associated with the sensitivity classification of the cargo pallet.

The end user web interface 1112 is communicatively coupled with the data storage and processing unit 1108 over a network. The end user web interface 1112 receives the in-flight cargo monitoring information from the data storage and processing unit 1108 and presents the in-flight cargo monitoring information to an end user. The end user may be an airline operator, a cargo carrier, or a freight forwarder associated with the cargo pallets. The end user web interface 1112 presents, for each cargo pallet, the cargo identifier of the cargo pallet, the time history of the one or more pallet conditions of the cargo pallet during the one or more phases of flight of the aircraft 1102, and the in-bounds condition or the out-of-bounds condition of the pallet conditions of the cargo pallet relative to the thresholds. This allows end user to identify how the cargo pallet was maintained during transit and one or more cargo pallets having the out-of-bounds condition.

The in-bounds condition, the out-of-bounds condition, and the thresholds against which pallet conditions are evaluated is now described with more detail. Each cargo pallet has a wireless tag attached to the cargo pallet. The wireless tag includes one or more pallet condition sensors and broadcasts a tag signal carrying a cargo identifier associated with the cargo pallet and pallet condition information produced by the pallet condition sensors. The pallet condition information identifies pallet conditions associated with the cargo pallet, which include one or more of a temperature of the cargo pallet, a relative humidity of the cargo pallet, a vibration of the cargo pallet, a shock event experienced by the cargo pallet, an orientation of the cargo pallet, a tilt of the cargo pallet, an ambient pressure of the cargo pallet, a light exposure of the cargo pallet, a battery state of the wireless tag, and a location of the cargo pallet. The pallet condition information is produced at a sampling cadence, which may be fixed (e.g., a sample every one minute, every five minutes, or every fifteen minutes) or variable (e.g., based on the proximity of a sampled value to one or more thresholds).

The thresholds are organized by a sensitivity classification associated with the cargo identifier in the tag context information. The sensitivity classification includes medical, pharmaceutical, cold chain (e.g., deep-frozen, frozen, refrigerated, and controlled-roomtemperature), a vibration-sensitive, live-animal, and general-cargo. For each sensitivity classification, the thresholds include a temperature threshold set, a relative humidity threshold set, a vibration threshold set, a shock threshold set, an orientation threshold set, an ambient pressure threshold set, and/or a light exposure threshold set. The thresholds are further parameterized in one example by a flight phase of the aircraft (pre-flight, taxi, take-off, cruise, descent, landing, post-flight), so that a more permissive threshold set is associated with a take-off or landing phase of flight that is associated with a higher baseline vibration or pressure variation.

The thresholds include: (i) a low threshold (T_low) defining a lower bound of an in-bounds range for the pallet condition; (ii) a high threshold (T_high) defining an upper bound of the in-bounds range for the pallet condition; (iii) a low warning threshold (T*low*warn) and a high warning threshold (T*high*warn) defining a warning band within the in-bounds range; (iv) a low alarm threshold (T*low*alarm) and a high alarm threshold (T*high*alarm) defining an alarm band outside the in-bounds range; (v) a rate-of-change threshold (R_th) defining a permitted maximum rate of change of the pallet condition over a specified time window; (vi) a duration threshold (D_th) defining a permitted maximum duration over which the pallet condition is permitted to be at a value outside the in-bounds range before the out-of-bounds condition is asserted; (vii) a cumulative-exposure threshold (E_th) defining a permitted maximum integral of an excursion of the pallet condition above the high threshold or below the low threshold over a specified time window, expressed in one example as mean kinetic temperature (MKT) for a temperature-sensitive pharmaceutical cargo pallet; (viii) a peak threshold (P_th) defining a permitted maximum instantaneous magnitude of the pallet condition (e.g., a peak shock magnitude, a peak vibration magnitude); and (ix) a count threshold (C_th) defining a permitted maximum number of excursions of the pallet condition outside the in-bounds range during a specified time window or over the duration of a flight.

The data storage and processing unit performs comparison operations between the pallet condition information produced by the pallet condition sensors and the thresholds. The comparison operations include a single-value comparison (current sample versus T*low and T*high), a rate comparison (computed rate of change versus R*th), a duration comparison (continuous time outside the in-bounds range versus D*th), a cumulative-exposure comparison (computed integral of excursion versus E*th), a peak comparison (maximum sample over a window versus P*th), and/or a count comparison (number of excursions over a window versus C_th).

The data storage and processing unit asserts an in-bounds condition for a pallet condition of a cargo pallet when the pallet condition information satisfies all applicable threshold tests of the comparison operations. In one example, the in-bounds condition is asserted when (a) each sample of the pallet condition is greater than or equal to T*low* and less than or equal to *T*high, (b) the computed rate of change of the pallet condition is less than R*th,* (c) no continuous time interval during which the pallet condition is outside the in-bounds range exceeds *D*th, (d) the cumulative exposure is less than E*th,* (e) no instantaneous sample exceeds *P*th, and (f) the number of excursions during the specified time window does not exceed C_th. When all applicable conditions are satisfied, the in-flight cargo monitoring information identifies the cargo pallet as carrying the in-bounds condition.

The data storage and processing unit asserts an out-of-bounds condition for the pallet condition of the cargo pallet when one or more of the threshold tests of the comparison operations is not satisfied. The out-of-bounds condition includes one or more of: (i) a low excursion (one or more samples of the pallet condition are less than T_low); (ii) a high excursion (one or more samples of the pallet condition are greater than T_high); (iii) a rate excursion (the computed rate of change of the pallet condition exceeds R_th); (iv) a sustained excursion (a continuous time interval during which the pallet condition is outside the in-bounds range exceeds D_th); (v) a cumulative-exposure excursion (the cumulative exposure exceeds E_th); (vi) a peak excursion (an instantaneous sample exceeds P_th); and (vii) a count excursion (the number of excursions during the specified time window exceeds C_th).

The in-flight cargo monitoring information identifies, for the cargo pallet, the type of out-of-bounds condition, a start timestamp of the out-of-bounds condition, an end timestamp of the out-of-bounds condition (if the out-of-bounds condition has cleared), one or more sample values associated with the out-of-bounds condition, the threshold against which the out-of-bounds condition is asserted, and the phase of flight of the aircraft 1102 at which the out-of-bounds condition occurred.

The out-of-bounds condition is assigned a severity classification by the data storage and processing unit. The severity classification includes an advisory severity (the pallet condition is in the warning band defined by T*low*warn and T*high*warn), a caution severity (the pallet condition is outside the in-bounds range defined by T*low and T*high but inside the alarm band defined by T*low*alarm and T*high*alarm, or one of the rate, duration, cumulative-exposure, peak, or count thresholds is exceeded by less than a specified margin), and/or an alarm severity (the pallet condition is outside the alarm band, or one of the rate, duration, cumulative-exposure, peak, or count thresholds is exceeded by greater than a specified margin, or a stability-defining threshold for a sensitivity classification is exceeded). The severity classification controls the response taken.

The data storage and processing unit maintains a time history of the pallet condition information for each cargo pallet over the phases of flight of the aircraft. The time history is processed by a moving-average filter (to suppress sensor noise), a moving-window peak detector (to identify peak excursions), a numerical integrator (to compute cumulative exposure), a finite-difference operator (to compute rate of change), and/or a regression model (to project a future value of the pallet condition).

The data storage and processing unit further asserts a predicted out-of-bounds condition when the regression model projects, with a specified confidence, that the pallet condition will exceed T*low or* T*high* within a specified prediction horizon. The predicted out-of-bounds condition is presented at the end user web interface with an indication that the condition is predicted rather than realized, allowing one or more proactive responses to be initiated.

The data storage and processing unit evaluates a data-quality condition associated with the pallet condition information. The data-quality condition is asserted as a valid condition (the pallet condition information is received within a specified staleness window, the wireless tag battery state is greater than a battery threshold, and the pallet condition information passes one or more sanity checks against a sensor range), a stale condition (the pallet condition information is not received within the specified staleness window), a low-battery condition (the wireless tag battery state is less than the battery threshold), and an out-of-range condition (a sample is outside a sensor range associated with the one or more pallet condition sensors). The in-bounds and out-of-bounds determinations are conditioned on the data-quality condition being the valid condition. When the data-quality condition is the stale condition, the low-battery condition, or the out-of-range condition, the in-flight cargo monitoring information identifies a data-quality condition flag rather than asserting an out-of-bounds condition.

In response to assertion of the out-of-bounds condition or the predicted out-of-bounds condition, the data storage and processing unit generates a monitoring action record. The monitoring action record identifies the cargo identifier of the cargo pallet, the type of out-of-bounds condition, the severity classification, the start timestamp, the flight phase, and one or more recommended monitoring actions. The end user web interface presents the monitoring action record to one or more entities, the one or more entities including one or more of an airline operator, a cargo carrier, a freight forwarder, a flight crew of the aircraft, a ground handling supervisor at a destination airport, and a consignee identified in the tag context information.

The one or more recommended monitoring actions include one or more of: (i) an in-flight notification to the flight crew through a flight deck display of the aircraft in response to the alarm severity associated with a live-animal classification or a high-value cargo; (ii) an initiation of a substitute shipment of the cargo pallet by the cargo carrier or the freight forwarder so that the substitute shipment is placed in a downstream pipeline before the aircraft lands at a destination, in response to a cumulative-exposure excursion of a pharmaceutical cargo pallet; (iii) a coordination with a destination ground handling supervisor for an expedited offloading of the cargo pallet upon landing, in response to a sustained excursion of a cold chain cargo pallet; (iv) a generation of a regulatory record documenting the out-of-bounds condition, archived by the data storage and processing unit in support of compliance with regulations applicable to the sensitivity classification of the cargo pallet; and/or (v) a generation of a quarantine record for the cargo pallet upon arrival at the destination, which is transmitted to the consignee and to the destination ground handling supervisor.

The transmission of the monitoring action record is coordinated with the connectivity-dependent transmission characteristic of the aircraft interface device, the data storage and processing unit receiving and processing the pallet condition information substantially in real time during the one or more phases of flight when the wireless communication link between the aircraft and the ground station is available, and processing a stored time history of the pallet condition information after a post-flight phase of the aircraft when the wireless communication link is unavailable during the one or more phases of flight.

In one example, the cargo pallet is a pharmaceutical cargo pallet carrying a refrigerated sub-classification. The temperature threshold set includes T*low = 2 °C, T*high = 8 °C, T*low*warn = 3 °C, T*high*warn = 7 °C, T*low*alarm = 0 °C, T*high*alarm = 10 °C, D*th = 30 minutes, and E*th expressed as a maximum mean kinetic temperature of 8 °C over the duration of the flight. The in-bounds condition is asserted when each sample is between 2 °C and 8 °C, the cumulative MKT is at or below 8 °C, and no continuous excursion exceeds 30 minutes. The out-of-bounds condition is asserted with the alarm severity when a sample is below 0 °C or above 10 °C, with the caution severity when a sample is outside the in-bounds range but inside the alarm band, and with the advisory severity when a sample is in the warning band.

In one example, the cargo pallet is a deep-frozen pharmaceutical cargo pallet. The temperature threshold set includes T*low = -80 °C,* T*high* = -60 °C, with corresponding warning and alarm bands and a duration threshold of 5 minutes for a sustained excursion. The cumulative-exposure threshold is expressed in one example as a maximum total time above T*high* during the duration of the flight.

In one example, the cargo pallet is a vibration-sensitive cargo pallet carrying a fragile electronic component. The vibration threshold set includes a peak threshold P*th = 5 g* for a single shock event and a cumulative-exposure threshold E*th* expressed as an integral of vibration magnitude above 1 g over the duration of the flight. The out-of-bounds condition is asserted upon a single shock event exceeding P*th* or upon the cumulative integral exceeding E*th*.

In one example, the cargo pallet is a live-animal pallet carrying a live animal having a handler-specified temperature range. The temperature threshold set is parameterized in one example with T*low = 10 °C and* T*high* = 25 °C, the relative humidity threshold set is parameterized with H*low = 30%* and H*high* = 70%, and an alarm severity is assigned to any sustained excursion exceeding D_th = 10 minutes.

In one example, the cargo item is a live-animal pallet carrying a live animal accompanied by a handler. The data storage and processing unit receives, through the third party storage unit, a handler-presence indication identifying the live-animal pallet as a handler-attended pallet. In response to identification of an out-of-bounds condition associated with the live-animal pallet during a phase of flight, the data storage and processing unit transmits an in-flight notification to a flight deck display of the aircraft, a mobile application installed on a mobile computing device of the handler, and/or a cabin-crew terminal disposed within a passenger compartment of the aircraft. The in-flight notification identifies the cargo identifier of the live-animal pallet, the type of out-of-bounds condition, and a recommended action to be performed by the handler with respect to the live animal. In one example, the live-animal pallet is an unattended live-animal pallet, and the data storage and processing unit transmits the in-flight notification to the flight deck display of the aircraft and to the destination ground handling supervisor for coordination of an expedited offloading and an animal-care response upon landing.

In one example, the cargo pallet is a general-cargo pallet without a stated sensitivity classification. The data storage and processing unit applies a default threshold set received from the constraint database, the default threshold set being parameterized to detect data-quality conditions and gross-excursion conditions only.

As above, different use cases are presented herein:
Capturing PHM data to provide component health estimates and remaining useful life information for cargo handling equipment. The data source is the cargo drive system network in which wireless sensing modules capture messages destined for the MAT, PHM fault messages, and operational counter data from the power drive units. Data is provided once per flight cycle, consistent with a maintenance-oriented record. The outcome of this use case produces a maintenance record supporting reduction of unscheduled maintenance and compliance with cargo handling safety regulations. This use case addresses the equipment carrying the cargo.

Tracking cargo presence to provide a visual indication of occupied and non-occupied cargo positions during loading. The data source includes the optical sensors of the power drive units. Wireless sensing modules read the optical sensor outputs to determine the occupied or non-occupied state of each cargo position, and also capture aircraft door state information. Data is provided in response to an event, and an update is presented accordingly at the end user web interface. The outcome of this use case produces a position-by-position occupancy view supporting load master situational awareness during loading. This use case addresses the presence of cargo at each position (binary occupancy detection).

Load sensing and reporting to provide identifier-level tracking of which cargo items have been loaded, in which positions, at what times, and in what order. The data source includes wireless tags attached to cargo items. Wireless sensing modules sense low energy tag signals broadcast by tags attached to each cargo item as the item enters and moves through the cabin, and produce sensed tag information including a cargo identifier, a cargo position, and a loading timestamp. A third party storage unit provides tag context information (descriptions, destinations, attributes associated with cargo identifiers) and a load plan, supporting per-item reporting. Data is provided in response to an event and an update is provided accordingly. The outcome of this use case produces a per-item loading record. This use case addresses the identity of cargo at each position (item-level tracking).

Load validation to provide a comparison of the actual final resting positions of cargo items against a load plan. The data source includes wireless tags attached to cargo items, sensed by a network of wireless sensing modules acting collectively. The network triangulates the tag signals (e.g., based on received signal strength indication, angle of arrival, or fusion with control system sensor transitions in the traction elements) to determine the final resting position of each cargo item. A third party storage unit provides tag context information and a load plan, with the load plan being used as the reference against which the sensed final resting positions are compared. Data is provided in response an event and an update provided in response thereto. The outcome of this use case produces a load validation result identifying matches and mismatches relative to the load plan, supporting weight-and-balance compliance, hazardous-material placement compliance, and corrective action. This use case addresses the correctness of cargo placement (comparison to a load plan).

In-flight cargo monitoring to provide a record of pallet conditions (e.g., temperature, humidity, vibration) during phases of flight. The data source includes wireless tags attached to cargo pallets, the wireless tags including one or more pallet condition sensors. The wireless sensing modules receive tag signals carrying cargo identifiers and pallet condition information (e.g., temperature, humidity, vibration) during phases of flight. A third party storage unit provides tag context information and a load plan. The tag context information includes a sensitivity classification (e.g., medical, pharmaceutical, cold chain, vibration-sensitive) used by the data storage and processing unit to evaluate the pallet condition information against thresholds associated with the sensitivity classification. Data is provided in response to an event and an update provided subject to availability of the wireless communication link. When the wireless communication link is unavailable during flight, the sensed pallet condition information is stored on the aircraft and transmitted after the post-flight phase. The outcome of this use case produces an in-flight monitoring record supporting medical, pharmaceutical, cold chain, and vibration-sensitive cargo handling. This use case addresses the condition of cargo during transit (environmental monitoring).

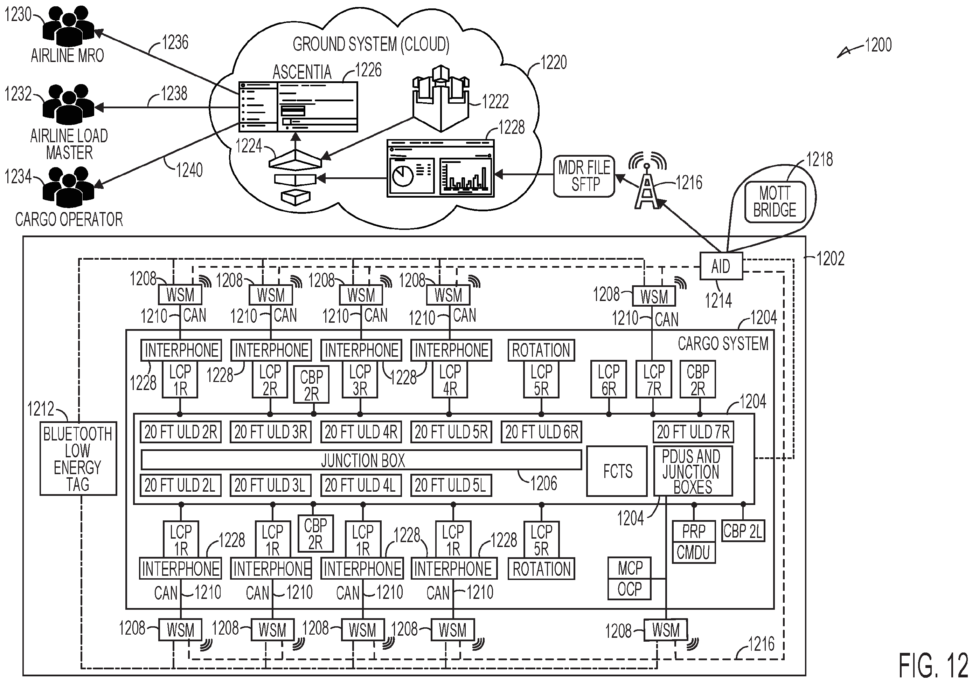

FIG. 12 illustrates an end-to-end cargo tracking and monitoring system, according to some examples. The end-to-end cargo tracking and monitoring system 1200 includes an aircraft cargo bay 1202 disposed on an aircraft, power drive units 1204 disposed within the aircraft cargo bay 1202, junction boxes 1206 disposed within the aircraft cargo bay 1202, wireless sensing modules 1208 disposed within the aircraft cargo bay 1202, controller area network links 1210 communicatively coupling the wireless sensing modules 1208 with the power drive units 1204 and the junction boxes 1206, low energy tags 1212 attached to cargo items carried within the aircraft cargo bay 1202, an aircraft interface device 1214 disposed on the aircraft, a cellular service or Wi-Fi data offload link 1216 communicatively coupling the aircraft interface device 1214 with a MQTT bridge 1218, the MQTT bridge 1218, and a cloud-based ground system 1220.

The cloud-based ground system 1220 includes an IoT core MQTT broker 1222, a data pipeline 1224, a data analytics and visualization platform 1226, and a web application interface 1228. The end-to-end cargo tracking and monitoring system 1200 further includes end users communicatively coupled with the web application interface 1228, the end users including an airline maintenance, repair, and overhaul user 1230, an airline load master user 1232, and a cargo operator user 1234. The data analytics and visualization platform 1226 produces, through the web application interface 1228, outputs to the end users, the outputs including a prognostic health monitoring analytics and visualization output 1236 delivered to the airline maintenance, repair, and overhaul user 1230, a unit load device status and location output 1238 delivered to the airline load master user 1232, and an in-flight container monitoring output 1240 delivered to the cargo operator user 1234.

The end-to-end cargo tracking and monitoring system 1200 supports a sensing-to-presentation data flow that begins at the low energy tags 1212 attached to the cargo items and at the power drive units 1204 of a cargo handling system disposed in the aircraft cargo bay 1202, proceeds through the wireless sensing modules 1208, the aircraft interface device 1214, the cellular service or Wi-Fi data offload link 1216, and the MQTT bridge 1218, enters the cloud-based ground system 1220 at the IoT core MQTT broker 1222, is processed through the data pipeline 1224 and the data analytics and visualization platform 1226, and terminates at the web application interface 1228 where the outputs are delivered to the end users.

The end-to-end cargo tracking and monitoring system 1200 in one example distributes one or more of the captured information and the sensed tag information to one or more flight data monitoring (FDM) providers through the data routing module of the aircraft interface device 1214. The FDM providers receive a flight data monitoring stream including the prognostic health monitoring fault messages, the operational counter data, and/or one or more flight data parameters acquired through the avionics connections of the aircraft interface device 1214. The FDM providers analyze the flight data monitoring stream to produce flight data monitoring outputs that are delivered to the airline maintenance, repair, and overhaul user 1230 through the web application interface 1228 or directly to the one or more FDM providers as a raw data stream.

The aircraft cargo bay 1202 is disposed within the aircraft and includes cargo positions arranged along a longitudinal axis of the aircraft cargo bay 1202 and along a lateral axis of the aircraft cargo bay 1202. The cargo positions are configured to receive cargo items, the cargo items in one example including unit load devices, cargo pallets, and cargo containers.

The power drive units 1204 are disposed beneath the cargo positions of the aircraft cargo bay 1202. Each power drive unit 1204 includes rollers, drive motors, and optical sensors. The rollers are engageable with a lower surface of a cargo item to translate the cargo item along the longitudinal axis or the lateral axis of the aircraft cargo bay 1202. The optical sensors produce optical sensor outputs identifying an occupied state or a non-occupied state of the cargo position associated with the power drive unit 1204. The power drive units 1204 are communicatively coupled with local control panels and a master control panel of the cargo handling system over the controller area network links 1210.

The junction boxes 1206 are disposed within the aircraft cargo bay 1202 and provide a power distribution interface and a data distribution interface between aircraft electrical buses, the controller area network links 1210, and the power drive units 1204. The junction boxes 1206 in one example include spring lift junction boxes associated with spring lift positions of the aircraft cargo bay 1202.

The wireless sensing modules 1208 are distributed within the aircraft cargo bay 1202. Each wireless sensing module 1208 includes a controller area network interface communicatively coupled with the controller area network links 1210, a low energy radio configured to receive tag signals broadcast by the low energy tags 1212, and a wireless data interface configured to communicate with the aircraft interface device 1214.

Each wireless sensing module 1208 captures, through the controller area network interface, of cargo handling system messages destined for a maintenance access terminal, prognostic health monitoring fault messages produced by the power drive units 1204, operational counter data produced by the power drive units 1204, and the optical sensor outputs produced by the optical sensors of the power drive units 1204. Each wireless sensing module 1208 further captures, through the low energy radio, the tag signals broadcast by the low energy tags 1212, and produces, based on the tag signals, sensed tag information including a cargo identifier, a cargo position, and pallet condition values associated with each cargo item of the cargo items. The wireless sensing modules 1208 transmit the captured information and the sensed tag information to the aircraft interface device 1214 through the wireless data interface.

The controller area network links 1210 communicatively couple the wireless sensing modules 1208 with the power drive units 1204 and the junction boxes 1206. The controller area network links 1210 include a plurality of controller area network buses distributed across the aircraft cargo bay 1202, with the wireless sensing modules 1208 being distributed across the controller area network buses so that the wireless sensing modules 1208 collectively cover the controller area network buses without modification of the cargo handling system. The wireless sensing modules 1208 communicate with a wireless access point, which then communicates with the aircraft interface device 1214.

The low energy tags 1212 are attached to the cargo items carried within the aircraft cargo bay 1202. Each low energy tag 1212 broadcasts a tag signal carrying a cargo identifier associated with the cargo item to which the low energy tag 1212 is attached and, in one example, pallet condition information produced by pallet condition sensors carried by the low energy tag 1212. The pallet condition sensors include a temperature sensor, a relative humidity sensor, a vibration sensor, a shock sensor, and an orientation sensor. The wireless sensing modules 1208 receive the signals from the low energy tags 1212.

The aircraft interface device 1214 is disposed on the aircraft and is communicatively coupled with the wireless sensing modules 1208 through the wireless access point. The aircraft interface device 1214 receives, from each wireless sensing module 1208, the captured information and the sensed tag information produced by the wireless sensing module 1208. The aircraft interface device 1214 aggregates the captured information and the sensed tag information from the wireless sensing modules 1208 and prepares the aggregated data for transmission from the aircraft to the cloud-based ground system 1220.

The cellular service or Wi-Fi data offload link 1216 communicatively couples the aircraft interface device 1214 with the MQTT bridge 1218. The cellular service or Wi-Fi data offload link 1216 include a cellular communication link and a Wi-Fi data offload link, the Wi-Fi data offload link being selected when the aircraft is within range of a Wi-Fi access point at an airport gate or at a maintenance facility, and the cellular communication link being selected when the aircraft is within range of a cellular network. The aircraft interface device 1214 transmits the aggregated data from the aircraft to the MQTT bridge 1218 over the cellular service or Wi-Fi data offload link 1216.

The MQTT bridge 1218 is communicatively coupled with the cellular service or Wi-Fi data offload link 1216 and with the cloud-based ground system 1220. The MQTT bridge 1218 forwards the aggregated data received from the aircraft interface device 1214 to the IoT core MQTT broker 1222 of the cloud-based ground system 1220. The MQTT bridge 1218 in one example translates between a transport protocol used over the cellular service or Wi-Fi data offload link 1216 and a publish-subscribe protocol used by the IoT core MQTT broker 1222, so that messages produced by the wireless sensing modules 1208 are delivered to the IoT core MQTT broker 1222 as published messages associated with topic identifiers.

The cloud-based ground system 1220 is communicatively coupled with the MQTT bridge 1218 and includes the IoT core MQTT broker 1222, the data pipeline 1224, the data analytics and visualization platform 1226, and the web application interface 1228. The cloud-based ground system 1220 is hosted in a cloud computing environment and is logically separated from the aircraft, so that the on-aircraft sensing components are decoupled from the ground-based processing components by the cellular service or Wi-Fi data offload link 1216 and the MQTT bridge 1218.

The IoT core MQTT broker 1222 receives the aggregated data forwarded by the MQTT bridge 1218 as published messages associated with the topic identifiers. The IoT core MQTT broker 1222 distributes the published messages to subscribers within the cloud-based ground system 1220, the subscribers including the data pipeline 1224. The IoT core MQTT broker 1222 may not retain a long-term history of the published messages and instead operates as a real-time message distribution layer between the aircraft interface device 1214 and the data pipeline 1224.

The data pipeline 1224 is communicatively coupled with the IoT core MQTT broker 1222 and receives the published messages from the IoT core MQTT broker 1222. The data pipeline 1224 performs data preparation operations on the published messages, the data preparation operations includes a parsing operation that extracts a payload of each published message, a normalization operation that converts the payload to a common data schema, an enrichment operation that associates the payload with tag context information and a load plan received from a third party storage unit, a validation operation that asserts a data-quality condition associated with the payload, and a storage operation that writes the payload and the enriched payload to a data lake of the data pipeline 1224 for long-term retention.

The data analytics and visualization platform 1226 is communicatively coupled with the data pipeline 1224 and receives the enriched payload from the data pipeline 1224. The data analytics and visualization platform 1226 performs analytics operations on the enriched payload. The analytics operations includes a prognostic health monitoring analytics operation that produces component health estimates and remaining useful life information for the power drive units 1204, a cargo presence tracking operation that produces a position-by-position occupancy view of the aircraft cargo bay 1202, a load sensing and reporting operation that produces a per-item loading record, a load validation operation that produces a load validation result by comparing sensed cargo configuration information with a load plan, an in-flight cargo monitoring operation that produces a time history of pallet condition values and asserts an in-bounds condition or an out-of-bounds condition for each cargo pallet, and a visualization operation that produces visualizations of the foregoing analytics results.

The data analytics and visualization platform 1226 produces the outputs of the end-to-end cargo tracking and monitoring system 1200, the outputs being delivered to the end users through the web application interface 1228.

The web application interface 1228 is communicatively coupled with the data analytics and visualization platform 1226 and receives the outputs from the data analytics and visualization platform 1226. The web application interface 1228 presents the outputs to the end users over a network, the network in one example including the public internet. The web application interface 1228 presents dashboards that include the aircraft health user interface previously described in connection with FIG. 5, the fleet status user interface previously described in connection with FIG. 6, and the per-aircraft loading user interface previously described in connection with FIG. 8.

The airline maintenance, repair, and overhaul user 1230 is communicatively coupled with the web application interface 1228 and receives the prognostic health monitoring analytics and visualization output 1236 from the web application interface 1228. The airline maintenance, repair, and overhaul user 1230 uses the prognostic health monitoring analytics and visualization output 1236 to plan and execute maintenance activities on the power drive units 1204 of the cargo handling system.

The airline load master user 1232 is communicatively coupled with the web application interface 1228 and receives the unit load device status and location output 1238 from the web application interface 1228. The airline load master user 1232 uses the unit load device status and location output 1238 to monitor a cargo loading operation, to verify that cargo items have been loaded in accordance with a load plan, and to take corrective action with respect to cargo items having a mismatch condition.

The cargo operator user 1234 is communicatively coupled with the web application interface 1228 and receives the in-flight container monitoring output 1240 from the web application interface 1228. The cargo operator user 1234 uses the in-flight container monitoring output 1240 to monitor pallet conditions during phases of flight, to identify cargo pallets having an out-of-bounds condition, and to coordinate responses with respect to the cargo pallets having the out-of-bounds condition.

The prognostic health monitoring analytics and visualization output 1236 is produced by the prognostic health monitoring analytics operation of the data analytics and visualization platform 1226 and identifies, for each power drive unit 1204, a component health estimate, a remaining useful life estimate, a fault indication, an operational counter value, and a fuselage view position of the power drive unit 1204. The prognostic health monitoring analytics and visualization output 1236 supports a maintenance-oriented record delivered to the airline maintenance, repair, and overhaul user 1230 in accordance with the prognostic health monitoring flow previously described in connection with FIG. 5.

The unit load device status and location output 1238 is produced by of the cargo presence tracking operation, the load sensing and reporting operation, and the load validation operation of the data analytics and visualization platform 1226 and identifies, for each cargo position of the cargo positions of the aircraft cargo bay 1202, of an occupied state, a non-occupied state, a cargo identifier of a cargo item carried at the cargo position, a loading timestamp of the cargo item, and a match condition or a mismatch condition between the cargo identifier and a planned cargo identifier assigned to the cargo position in a load plan. The unit load device status and location output 1238 supports a loading-oriented record delivered to the airline load master user 1232 in accordance with the cargo presence tracking flow previously described in connection with FIG. 7, the load sensing and reporting flow previously described in connection with FIG. 9, and the load validation flow previously described in connection with FIG. 10.

The in-flight container monitoring output 1240 is produced by the in-flight cargo monitoring operation of the data analytics and visualization platform 1226 and identifies, for each cargo pallet of cargo pallets, of a cargo identifier of the cargo pallet, a time history of pallet conditions of the cargo pallet during phases of flight of the aircraft, an in-bounds condition or an out-of-bounds condition of the pallet conditions relative to thresholds, and a severity classification of the out-of-bounds condition. The in-flight container monitoring output 1240 supports a monitoring-oriented record delivered to the cargo operator user 1234 in accordance with the in-flight cargo monitoring flow previously described in connection with FIG. 11 and in accordance with the in-bounds and out-of-bounds threshold description previously provided.

The end-to-end cargo tracking and monitoring system 1200 provides technical improvements over legacy configurations of an aircraft cargo handling system. The end-to-end cargo tracking and monitoring system 1200 addresses such limitations by providing a wireless sensing module 1208 that captures the underlying process variables, the operational counter values, and the maintenance access terminal-destined messages from the controller area network bus and forwards the captured data through the aircraft interface device 1214 and the cellular service or Wi-Fi data offload link 1216 to the cloud-based ground system 1220. The cloud-based ground system 1220 produces a common-mode failure attribution by identifying fault messages associated with components sharing a common bus or upstream component, produces a remaining useful life estimate based on the operational counter values, and produces an absent item alert based on tag signals sensed at the loading area of the aircraft prior to door closure. The end-to-end cargo tracking and monitoring system 1200 thereby provides a particular technical solution to a particular technical problem in the field of aircraft cargo handling, the technical solution being grounded in the integration of the wireless sensing module 1208 with the existing controller area network bus, the integration of the bluetooth low energy radio with the wireless sensing module 1208 to sense the bluetooth low energy tags 1212, the use of the publish-subscribe protocol to deliver published messages from the aircraft to the cloud-based ground system 1220, and the use of the data analytics and visualization platform 1226 to produce the component health estimate, the remaining useful life estimate, the cargo presence indication, the load validation result, and the in-flight container monitoring output.

The embodiments disclosed herein have broad potential in various industries, starting with aircraft cargo management, where the embodiments enable real-time tracking of cargo within aircraft holds, providing visibility into cargo presence, location, and health throughout the flight. Moreover, PHM for cargo systems allows the system to predict and monitor the health of aircraft cargo equipment like traction devices and control systems enhancing maintenance processes and extending the lifespan of critical assets. The system's capabilities also extend to logistics and supply chain management, where the system can be used to monitor goods in transit, such as on trucks, trains, or ships, providing critical insights into cargo conditions and movement. Additionally, warehousing and distribution can benefit by improving inventory management and automating asset tracking processes within large storage facilities.

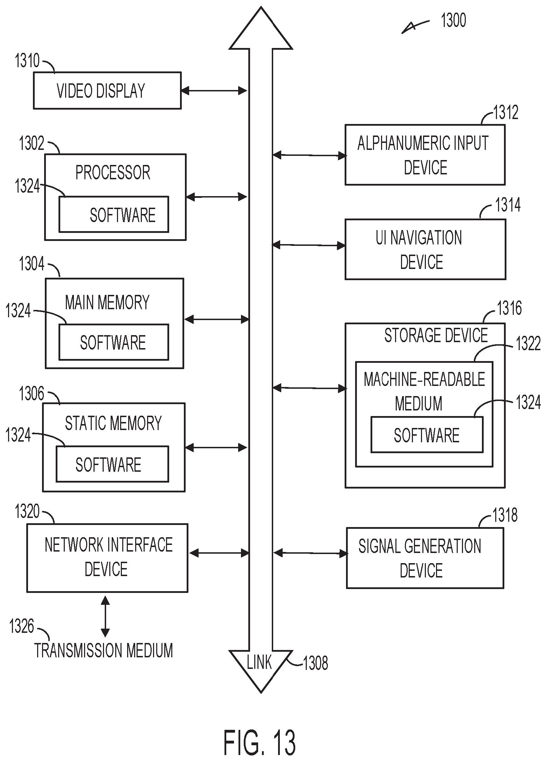

FIG. 13 illustrates a block diagram of an electronic device, according to some examples. The electronic device 1300 may be a power cart, or any machine capable of executing instructions (sequential or otherwise) that specify actions to be taken by that machine.

Examples, as described herein, may include, or may operate on, logic or a number of components, modules, or mechanisms. Modules and components are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The electronic device 1300 may include a hardware processor (or equivalently processing circuitry) 1302 (e.g., a central processing unit (CPU), a GPU, a hardware processor core, or any combination thereof), a main memory 1304 and a static memory 1306, some or all of which may communicate with each other via an interlink (e.g., bus) 1308. The main memory 1304 may contain any or all of removable storage and non-removable storage, volatile memory or non-volatile memory. The electronic device 1300 may further include a display unit 1310 such as a video display, an alphanumeric input device 1312 (e.g., a keyboard), and a user interface (UI) navigation device 1314 (e.g., a mouse). In an example, the display unit 1310, input device 1312 and UI navigation device 1314 may be a touch screen display. The electronic device 1300 may additionally include a storage device (e.g., drive unit) 1316, a signal generation device 1318 (e.g., a speaker), a network interface device 1320, and one or more sensors, such as a global positioning system (GPS) sensor, compass, accelerometer, or another sensor. The electronic device 1300 may further include an output controller, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 1316 may include a non-transitory machine readable medium 1322 (hereinafter simply referred to as machine readable medium) on which is stored one or more sets of data structures or instructions 1324 (e.g., software) embodying or utilized by any one or more of the techniques or functions described herein. The non-transitory machine readable medium 1322 is a tangible medium. The instructions 1324 may also reside, completely or at least partially, within the main memory 1304, within static memory 1306, and/or within the hardware processor 1302 during execution thereof by the electronic device 1300. While the machine readable medium 1322 is illustrated as a single medium, the term "machine readable medium" may include a single medium or multiple media (e.g., a centralized or distributed database, and/or associated caches and servers) configured to store the one or more instructions 1324.

The term "machine readable medium" may include any medium that is capable of storing, encoding, or carrying instructions for execution by the electronic device 1300 and that cause the electronic device 1300 to perform any one or more of the techniques of the present disclosure, or that is capable of storing, encoding or carrying data structures used by or associated with such instructions. Non-limiting machine-readable medium examples may include solid-state memories, and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks.

The instructions 1324 may further be transmitted or received over a communications network using a transmission medium 1326 via the network interface device 1320 utilizing any one of a number of wireless local area network (WLAN) transfer protocols (e.g., internet protocol (IP)). Example communication networks may include a local area network (LAN), a wide area network (WAN), a packet data network (e.g., the Internet), cellular networks, and wireless data networks. Communications over the networks may include one or more different protocols, such as Institute of Electrical and Electronics Engineers (IEEE) 802.11, Long Term Evolution (LTE), peer-to-peer (P2P) networks, next generation (NG)/5^{th} generation (5G). In an example, the network interface device 1320 may include one or more physical jacks (e.g., Ethernet, coaxial, or phone jacks) or one or more antennas to connect to the transmission medium 1326.

Note that the term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" or "processor" as used herein thus refers to, is part of, or includes circuitry capable of sequentially and automatically carrying out a sequence of arithmetic or logical operations, or recording, storing, and/or transferring digital data. The term "processor circuitry" or "processor" may refer to one or more application processors, one or more baseband processors, a physical central processing unit (CPU), a single- or multi-core processor, and/or any other device capable of executing or otherwise operating computer-executable instructions, such as program code, software modules, and/or functional processes.

### Examples

Example 1 is a non-transitory computer-readable medium storing instructions that, when executed by one or more processors of a ground-based computing system, cause the ground-based computing system to perform operations comprising: receiving, from an aircraft interface device aboard an aircraft over a wireless communication link, sensed data aggregated by the aircraft interface device from a plurality of wireless sensing modules distributed within a cargo bay of the aircraft, the sensed data including low energy tag data derived from a plurality of low energy tags attached to cargo within the cargo bay and sensor data derived from one or more power drive units of a cargo handling system within the cargo bay, the one or more power drive units disposed beneath one or more cargo positions of the cargo bay, a master control panel communicatively coupled with the one or more power drive units; determining, based on the low energy tag data, a tag identifier and a sensed position within the cargo bay for at least one low energy tag of the plurality of low energy tags; determining, based on the sensor data, a sensor transition indication associated with at least one power drive unit of the one or more power drive units; refining the sensed position for the at least one low energy tag by reconciling the sensed position with the sensor transition indication to produce a refined cargo position; performing a comparison between the refined cargo position and a load plan associated with the aircraft to identify a deviation, the deviation including a mismatch between the refined cargo position of a target cargo item identified by the tag identifier and a target cargo position that is designated for the target cargo item by the load plan; and transmitting, in response to identifying the deviation, a relocation command identifying the target cargo position and the target cargo item, the identified target cargo item being translated along the cargo bay to the identified target cargo position by at least one of the one or more power drive units, dependent on the relocation command, prior to departure of the aircrafttarget cargo position by at least one of the one or more power drive units dependent on the relocation command.

In Example 2, the subject matter of Example 1 includes, wherein: the sensor data includes optical sensor data, the operations further comprise determining, based on the optical sensor data, an occupancy status for a plurality of cargo positions within the cargo bay, and the comparison compares the refined cargo position and the occupancy status against the load plan to identify the deviation.

In Example 3, the subject matter of Example 2 includes, wherein the operations further comprise: receiving a door state indication associated with a cargo door of the aircraft, and conditioning the comparison based on the door state indication to execute the comparison in response to the door state indication indicating a closed state of the cargo door and trigger a final validation of the load plan prior to the departure of the aircraft.

In Example 4, the subject matter of Examples 1-3 includes, wherein: the sensor data includes fault data, and the operations further comprise generating, based on the fault data, a prognostic health output indicating a health status of the at least one power drive unit.

In Example 5, the subject matter of Example 4 includes, wherein: generating the prognostic health output further uses an operational counter associated with the at least one power drive unit, the operational counter increments in response to actuation of the at least one power drive unit, and the operations further comprise issuing, in response to the prognostic health output indicating a degraded health status, a maintenance work order associated with the at least one power drive unit prior to a next flight cycle of the aircraft.

In Example 6, the subject matter of Examples 1-5 includes, wherein: the load plan includes a weight and balance constraint associated with the aircraft, and the comparison identifies the deviation based at least in part on the weight and balance constraint of the aircraft.

In Example 7, the subject matter of Example 6 includes, wherein: the relocation command further specifies a corrective action that includes translating one or more cargo items from one or more current cargo positions within the cargo bay to one or more revised cargo positions until the load plan is satisfied, and the operations further comprise receiving updated low energy tag data following completion of the corrective action and confirming, based on the updated low energy tag data, that the load plan is satisfied prior to departure of the aircraft.

In Example 8, the subject matter of Examples 1-7 includes, wherein: the low energy tag data includes a cargo condition reading associated with the at least one low energy tag of the plurality of low energy tags during a phase of flight of the aircraft, and the operations further comprise: generating, in response to the cargo condition reading exceeding a predetermined cargo condition threshold associated with the target cargo item, an in-flight cargo alert prior to landing of the aircraft, and initiating, in response to the in-flight cargo alert, a replacement shipment record associated with the target cargo item before landing of the aircraft.

In Example 9, the subject matter of Examples 1-8 includes, wherein: refining the sensed position applies a motion model to the sensed position and resets the motion model in response to the sensor transition indication to produce the refined cargo position, and the motion model includes a Kalman filter operating on a received signal strength indicator derived from the low energy tag data.

In Example 10, the subject matter of Example 9 includes, wherein: the low energy tag data further includes an angle of arrival measurement, and refining the sensed position further reconciles the angle of arrival measurement with the sensor transition indication.

In Example 11, the subject matter of Examples 1-10 includes, wherein: receiving the sensed data is performed through a publish-subscribe message bridge between the aircraft interface device and the ground-based computing system, and transmitting the relocation command is performed within a predetermined event-to-update interval following identification of the deviation.

In Example 12, the subject matter of Examples 1-11 includes, wherein: receiving the sensed data and transmitting the relocation command are performed in real time, the operations further comprise rendering, in response to receiving the sensed data, a web-based monitoring view that depicts a current loading state of the cargo bay to a remote user during loading of the aircraft, and receiving the sensed data is performed through a publish-subscribe message broker that receives, from the aircraft interface device, one or more published messages associated with one or more topic identifiers and distributes the one or more published messages to one or more subscribers, the one or more subscribers including the ground-based computing system.

In Example 13, the subject matter of Example 12 includes, wherein: the operations further comprise updating the web-based monitoring view within a predetermined event-to-update interval following a change in the sensed data, the relocation command is transmitted within the predetermined event-to-update interval following identification of the deviation, and the web-based monitoring view depicts the target cargo position as a deviation indicator and updates the deviation indicator in response to the one or more power drive units translating the target cargo item to the target cargo position to provide the remote user with a confirmation of corrective action prior to the departure of the aircraft.

Example 14 is a ground-based computing system comprising a processor and memory storing instructions that, when executed by the processor, cause the ground-based computing system to perform operations comprising: receiving, from an aircraft interface device aboard an aircraft over a wireless communication link, sensed data aggregated by the aircraft interface device from a plurality of wireless sensing modules distributed within a cargo bay of the aircraft, the sensed data including low energy tag data derived from a plurality of low energy tags attached to cargo within the cargo bay and sensor data derived from one or more power drive units of a cargo handling system within the cargo bay, the one or more power drive units disposed beneath one or more cargo positions of the cargo bay, a master control panel communicatively coupled with the one or more power drive units; determining, based on the low energy tag data, a tag identifier and a sensed position within the cargo bay for at least one low energy tag of the plurality of low energy tags; determining, based on the sensor data, a sensor transition indication associated with at least one power drive unit of the one or more power drive units; refining the sensed position for the at least one low energy tag by reconciling the sensed position with the sensor transition indication to produce a refined cargo position; performing a comparison between the refined cargo position and a load plan associated with the aircraft to identify a deviation, the deviation including a mismatch between the refined cargo position of a target cargo item identified by the tag identifier and a target cargo position that is designated for the target cargo item by the load plan; and transmitting, in response to identifying the deviation, a relocation command identifying the target cargo position and the target cargo item, the identified target cargo item being translated along the cargo bay to the identified target cargo position by at least one of the one or more power drive units, dependent on the relocation command, prior to departure of the aircraft target cargo position by at least one of the one or more power drive units dependent on the relocation command.

In Example 15, the subject matter of Example 14 includes, wherein: the sensor data derived includes optical sensor data, and the operations further comprise: determining, based on the optical sensor data, an occupancy status for a plurality of cargo positions within the cargo bay, the comparison comparing the refined cargo position and the occupancy status against the load plan to identify the deviation, receiving a door state indication associated with a cargo door of the aircraft, and conditioning the comparison based on the door state indication to execute the comparison in response to the door state indication indicating a closed state of the cargo door and trigger a final validation of the load plan prior to the departure of the aircraft.

In Example 16, the subject matter of Examples 14-15 includes, wherein: the sensor data includes fault data, and the operations further comprise: generating, based on the fault data, a prognostic health output indicating a health status of the at least one power drive unit, generating the prognostic health output further uses an operational counter associated with the at least one power drive unit, the operational counter incrementing in response to actuation of the at least one power drive unit, and issuing, in response to the prognostic health output indicating a degraded health status, a maintenance work order associated with the at least one power drive unit prior to a next flight cycle of the aircraft.

In Example 17, the subject matter of Examples 14-16 includes, wherein: the load plan includes a weight and balance constraint associated with the aircraft, the comparison identifies the deviation based at least in part on the weight and balance constraint of the aircraft, the relocation command further specifies a corrective action that includes translating one or more cargo items from one or more current cargo positions within the cargo bay to one or more revised cargo positions until the load plan is satisfied, and the operations further comprise receiving updated low energy tag data following completion of the corrective action and confirming, based on the updated low energy tag data, that the load plan is satisfied prior to departure of the aircraft.

In Example 18, the subject matter of Examples 14-17 includes, wherein: the low energy tag data includes a cargo condition reading associated with at least one low energy tag of the plurality of low energy tags during a phase of flight of the aircraft, and the operations further comprise: generating, in response to the cargo condition reading exceeding a predetermined cargo condition threshold associated with the target cargo item, an in-flight cargo alert prior to landing of the aircraft, and initiating, in response to the in-flight cargo alert, a replacement shipment record associated with the target cargo item before landing of the aircraft.

Example 19 is a method of loading an aircraft, the method comprising: receiving, by a processor from an aircraft interface device aboard an aircraft over a wireless communication link, sensed data aggregated by the aircraft interface device from a plurality of wireless sensing modules distributed within a cargo bay of the aircraft, the sensed data including low energy tag data derived from a plurality of low energy tags attached to cargo within the cargo bay and sensor data derived from one or more power drive units of a cargo handling system within the cargo bay, the one or more power drive units disposed beneath one or more cargo positions of the cargo bay, a master control panel communicatively coupled with the one or more power drive units; determining, by the processor based on the low energy tag data, a tag identifier and a sensed position within the cargo bay for at least one low energy tag of the plurality of low energy tags; determining, by the processor based on the sensor data, a sensor transition indication associated with at least one power drive unit of the one or more power drive units; refining, by the processor, the sensed position for the at least one low energy tag by reconciling the sensed position with the sensor transition indication to produce a refined cargo position; performing, by the processor, a comparison between the refined cargo position and a load plan associated with the aircraft to identify a deviation, the deviation including a mismatch between the refined cargo position of a target cargo item identified by the tag identifier and a target cargo position that is designated for the target cargo item by the load plan; and transmitting, by the processor in response to identifying the deviation, a relocation instruction to a personnel interface, the relocation instruction identifying the target cargo item and the target cargo position, the relocation instruction indicating a translation of the target cargo item along the cargo bay to the target cargo position, by at least one of the one or more power drive units under control of personnel, prior to departure of the aircraft.

In Example 20, the subject matter of Example 19 includes, wherein: the sensor data includes optical sensor data, and the method further comprises: determining, by the processor based on the optical sensor data, an occupancy status for a plurality of cargo positions within the cargo bay, the comparison comparing the refined cargo position and the occupancy status against the load plan to identify the deviation, receiving, by the processor, a door state indication associated with a cargo door of the aircraft, and conditioning, by the processor, the comparison based on the door state indication to execute the comparison in response to the door state indication indicating a closed state of the cargo door and trigger a final validation of the load plan prior to the departure of the aircraft.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

Although an embodiment has been described with reference to specific example embodiments, it will be evident that variations are possible without departing from the scope of the invention as defined by the claims. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein.
In this document, the terms "a" or "an" are used, as is common in patent documents, to indicate one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects. As indicated herein, although the term "a" is used herein, one or more of the associated elements may be used in different embodiments. For example, the term "a processor" configured to carry out specific operations includes both a single processor configured to carry out all of the operations as well as multiple processors individually configured to carry out some or all of the operations (which may overlap) such that the combination of processors carry out all of the operations. Further, the term "includes" may be considered to be interpreted as "includes at least" the elements that follow.

## Claims

1. A non-transitory computer-readable medium storing instructions that, when executed by one or more processors (1302) of a ground-based computing system, cause the ground-based computing system to perform operations comprising:
receiving, from an aircraft interface device (316) aboard an aircraft (202) over a wireless communication link, sensed data aggregated by the aircraft interface device from a plurality of wireless sensing modules (310) distributed within a cargo bay (302) of the aircraft, the sensed data including low energy tag data derived from a plurality of low energy tags (314) attached to cargo within the cargo bay and sensor data derived from one or more power drive units (306) of a cargo handling system (304) within the cargo bay, the one or more power drive units disposed beneath one or more cargo positions of the cargo bay, a master control panel communicatively coupled with the one or more power drive units;
determining, based on the low energy tag data, a tag identifier and a sensed position within the cargo bay for at least one low energy tag of the plurality of low energy tags;
determining, based on the sensor data, a sensor transition indication associated with at least one power drive unit of the one or more power drive units;
refining the sensed position for the at least one low energy tag by reconciling the sensed position with the sensor transition indication to produce a refined cargo position;
performing a comparison between the refined cargo position and a load plan associated with the aircraft to identify a deviation, the deviation including a mismatch between the refined cargo position of a target cargo item identified by the tag identifier and a target cargo position that is designated for the target cargo item by the load plan; and
transmitting, in response to identifying the deviation, a relocation command identifying the target cargo position and the target cargo item, the identified target cargo item being translated along the cargo bay to the identified target cargo position by at least one of the one or more power drive units, dependent on the relocation command, prior to departure of the aircraft.

2. A ground-based computing system comprising a processor (1302) and memory (1304) storing instructions that, when executed by the processor, cause the ground-based computing system to perform operations comprising:
receiving, from an aircraft interface device (316) aboard an aircraft (202) over a wireless communication link, sensed data aggregated by the aircraft interface device from a plurality of wireless sensing modules (310) distributed within a cargo bay (302) of the aircraft, the sensed data including low energy tag data derived from a plurality of low energy tags (314) attached to cargo within the cargo bay and sensor data derived from one or more power drive units (306) of a cargo handling system (304) within the cargo bay, the one or more power drive units disposed beneath one or more cargo positions of the cargo bay, a master control panel communicatively coupled with the one or more power drive units;
determining, based on the low energy tag data, a tag identifier and a sensed position within the cargo bay for at least one low energy tag of the plurality of low energy tags;
determining, based on the sensor data, a sensor transition indication associated with at least one power drive unit of the one or more power drive units;
refining the sensed position for the at least one low energy tag by reconciling the sensed position with the sensor transition indication to produce a refined cargo position;
performing a comparison between the refined cargo position and a load plan associated with the aircraft to identify a deviation, the deviation including a mismatch between the refined cargo position of a target cargo item identified by the tag identifier and a target cargo position that is designated for the target cargo item by the load plan; and
transmitting, in response to identifying the deviation, a relocation command identifying the target cargo position and the target cargo item, the identified target cargo item being translated along the cargo bay to the identified target cargo position by at least one of the one or more power drive units, dependent on the relocation command, prior to departure of the aircraft.

3. The non-transitory computer-readable medium of claim 1 or the ground-based computing system of claim 2, wherein:
the sensor data includes optical sensor data,
the operations further comprise determining, based on the optical sensor data, an occupancy status for a plurality of cargo positions within the cargo bay, and
the comparison compares the refined cargo position and the occupancy status against the load plan to identify the deviation.

4. The non-transitory computer-readable medium or the ground-based computing system of claim 3, wherein the operations further comprise:
receiving a door state indication associated with a cargo door of the aircraft, and
conditioning the comparison based on the door state indication to execute the comparison in response to the door state indication indicating a closed state of the cargo door and trigger a final validation of the load plan prior to the departure of the aircraft.

5. The non-transitory computer-readable medium of claim 1 or the ground-based computing system of claim 2, wherein:
the sensor data includes fault data, and
the operations further comprise generating, based on the fault data, a prognostic health output indicating a health status of the at least one power drive unit.

6. The non-transitory computer-readable medium or the ground-based computing system of claim 5, wherein:
generating the prognostic health output further uses an operational counter associated with the at least one power drive unit,
the operational counter increments in response to actuation of the at least one power drive unit, and
the operations further comprise issuing, in response to the prognostic health output indicating a degraded health status, a maintenance work order associated with the at least one power drive unit prior to a next flight cycle of the aircraft.

7. The non-transitory computer-readable medium or the ground-based computing system of any preceding claim, wherein:
the load plan includes a weight and balance constraint associated with the aircraft, and
the comparison identifies the deviation based at least in part on the weight and balance constraint of the aircraft.

8. The non-transitory computer-readable medium or the ground-based computing system of claim 7, wherein:
the relocation command further specifies a corrective action that includes translating one or more cargo items from one or more current cargo positions within the cargo bay to one or more revised cargo positions until the load plan is satisfied, and
the operations further comprise receiving updated low energy tag data following completion of the corrective action and confirming, based on the updated low energy tag data, that the load plan is satisfied prior to departure of the aircraft.

9. The non-transitory computer-readable medium or the ground-based computing system of any preceding claim, wherein:
the low energy tag data includes a cargo condition reading associated with the at least one low energy tag of the plurality of low energy tags during a phase of flight of the aircraft, and
the operations further comprise:
generating, in response to the cargo condition reading exceeding a predetermined cargo condition threshold associated with the target cargo item, an in-flight cargo alert prior to landing of the aircraft, and
initiating, in response to the in-flight cargo alert, a replacement shipment record associated with the target cargo item before landing of the aircraft.

10. The non-transitory computer-readable medium or the ground-based computing system of any preceding claim, wherein:
refining the sensed position applies a motion model to the sensed position and resets the motion model in response to the sensor transition indication to produce the refined cargo position, and
the motion model includes an object tracking algorithm operating on a received signal strength indicator derived from the low energy tag data.

11. The non-transitory computer-readable medium or the ground-based computing system of claim 10, wherein:
the low energy tag data further includes an angle of arrival measurement, and
refining the sensed position further reconciles the angle of arrival measurement with the sensor transition indication.

12. The non-transitory computer-readable medium or the ground-based computing system of any preceding claim, wherein:
receiving the sensed data is performed through a publish-subscribe message bridge between the aircraft interface device and the ground-based computing system, and
transmitting the relocation command is performed within a predetermined event-to-update interval following identification of the deviation.

13. The non-transitory computer-readable medium or the ground-based computing system of any preceding claim, wherein:
receiving the sensed data and transmitting the relocation command are performed in real time,
the operations further comprise rendering, in response to receiving the sensed data, a web-based monitoring view that depicts a current loading state of the cargo bay to a remote user during loading of the aircraft, and
receiving the sensed data is performed through a publish-subscribe message broker that receives, from the aircraft interface device, one or more published messages associated with one or more topic identifiers and distributes the one or more published messages to one or more subscribers, the one or more subscribers including the ground-based computing system; and optionally:
wherein:
the operations further comprise updating the web-based monitoring view within a predetermined event-to-update interval following a change in the sensed data,
the relocation command is transmitted within the predetermined event-to-update interval following identification of the deviation, and
the web-based monitoring view depicts the target cargo position as a deviation indicator and updates the deviation indicator in response to the one or more power drive units translating the target cargo item to the target cargo position to provide the remote user with a confirmation of corrective action prior to the departure of the aircraft.

14. A method of loading an aircraft, the method comprising:
receiving, by a processor from an aircraft interface device aboard an aircraft over a wireless communication link, sensed data aggregated by the aircraft interface device from a plurality of wireless sensing modules distributed within a cargo bay of the aircraft, the sensed data including low energy tag data derived from a plurality of low energy tags attached to cargo within the cargo bay and sensor data derived from one or more power drive units of a cargo handling system within the cargo bay, the one or more power drive units disposed beneath one or more cargo positions of the cargo bay, a master control panel communicatively coupled with the one or more power drive units;
determining, by the processor based on the low energy tag data, a tag identifier and a sensed position within the cargo bay for at least one low energy tag of the plurality of low energy tags;
determining, by the processor based on the sensor data, a sensor transition indication associated with at least one power drive unit of the one or more power drive units;
refining, by the processor, the sensed position for the at least one low energy tag by reconciling the sensed position with the sensor transition indication to produce a refined cargo position;
performing, by the processor, a comparison between the refined cargo position and a load plan associated with the aircraft to identify a deviation, the deviation including a mismatch between the refined cargo position of a target cargo item identified by the tag identifier and a target cargo position that is designated for the target cargo item by the load plan; and
transmitting, by the processor in response to identifying the deviation, a relocation instruction to a personnel interface, the relocation instruction identifying the target cargo item and the target cargo position, the relocation instruction indicating a translation of the target cargo item along the cargo bay to the target cargo position, by at least one of the one or more power drive units under control of personnel, prior to departure of the aircraft.

15. The method of claim 14, wherein:
the sensor data includes optical sensor data, and
the method further comprises:
determining, by the processor based on the optical sensor data, an occupancy status for a plurality of cargo positions within the cargo bay, the comparison comparing the refined cargo position and the occupancy status against the load plan to identify the deviation,
receiving, by the processor, a door state indication associated with a cargo door of the aircraft, and
conditioning, by the processor, the comparison based on the door state indication to execute the comparison in response to the door state indication indicating a closed state of the cargo door and trigger a final validation of the load plan prior to the departure of the aircraft.
